# EUROPEAN PATENT APPLICATION

(11) **EP 3 267 323 A1**
(43) Date of publication of application: **10.01.2018**
(21) Application number: 16758636.1
(22) Date of filing: 02.03.2016
(51) Int. Cl.: G06F 15/00, G06F 9/46, G06F 9/50, G06F 13/00

(54) **THIN CLIENT SYSTEM, CONNECTION MANAGEMENT DEVICE, VIRTUAL MACHINE OPERATING DEVICE, METHOD, AND STORAGE MEDIUM**

(30) Priority: 05.03.2015 JP 2015043226
(71) Applicant: NEC Corporation, Tokyo 108-8001 (JP)
(72) Inventor: SAKAMOTO, Yuu, Tokyo 108-8001 (JP)
(74) Representative: Vossius & Partner Patentanwälte Rechtsanwälte mbB
(86) International application number: PCT/JP2016/001118
(87) International publication number: WO 2016/139938

(57) **Abstract**

The purpose of the present invention is to provide a thin client system using a virtual machine which more satisfactorily suppresses occurrences of login storms. A connection management device 10 comprises: a virtual machine selection unit 11 which, on the basis of usage information of virtual machines 21 and valid profile location information of each user, selects the virtual machines 21 which are to be allocated to the users who log in to a thin client system 1; and a user session management unit 12 which, according to connection states of the users with respect to the virtual machines 21, updates the usage information and the valid profile location information. The virtual machines 21 comprise: a user profile management unit 22 which acquires, from the virtual machine or a user profile storage device 210, the valid user profiles of the users who have logged in to the virtual machine, and when the users log out, stores the user profiles on the user profile storage device 210 while saving the user profiles on the virtual machine; and a user connection monitoring unit 23 which monitors the connection states of the users to virtual machine.

## Description

### Technical Field

The present invention relates to a thin client system using a virtual machine.

### Background Art

In recent years, thin client systems using virtual machines are getting prevalent. Such a thin client system is often operated such that virtual machines fewer than users are shared among the users. In this case, user profiles are managed as mobile user profiles. The mobile user profiles are stored in a file server, and when a user logs in, a copy of a mobile user profile of the user on the file server is stored to the virtual machine to which the user logs in. When the user logs out, the copy of the mobile user profile of the user on the virtual machine to which the user has logged in is stored to the file server and the user profile is deleted from the virtual machine. In large thin client systems, therefore, login storms occur in which a large number of copies of user profiles to virtual machines are created upon login.

PTL 1 discloses an exemplary technique related to such a problem. This related-art technique records information indicating the last-used user name, for each virtual machine. This related-art technique selects and allocates to a thin client terminal, a virtual machine, if any, having a last-used user name matching the user name used in login, when the user logs in from the thin client terminal. In this manner, this related-art technique allocates the same virtual machine as that was used last time to each user as much as possible. As long as the copies of user profiles generated when the users log in are left undeleted even when they log out, each virtual machine can reuse the user profile on this virtual machine when the same user logs in again.

PTL 2 discloses another exemplary technique related to such a problem. This related-art technique manages mobile user profiles in layers. Higher-level layers include more recently accessed data. This related-art technique transfers the mobile user profiles from a file server to a virtual machine in turn from the highest-level layer, when the user logs in. Data of the mobile user profiles that is required in login is recently-accessed data, which is located in the highest-level layer. The virtual machine completes the login procedure upon receiving the highest-level layer. Hence, this related-art technique reduces the volume of data, requiring transfer before the completion of the login procedure, of the mobile user profiles to be transferred in login.

### Citation List

### Patent Literature

[PTL 1] Japanese Unexamined Patent Application Publication No. 2013-174945
[PTL 2] Japanese Unexamined Patent Application Publication No. 2013-16186

### Summary of Invention

### Technical Problem

However, the related-art techniques disclosed in PTLs 1 and 2 pose the following problems.

In the related-art technique disclosed in PTL 1, when no virtual machine has a last-used user name matching the user name used in login, a virtual machine having a different last-used user name is selected using another criterion and allocated to the user. A virtual machine most recently allocated to a certain user may be allocated to a different user before the certain user logs in next time. In this case, this related-art technique rewrites the last-used user name of the virtual machine from the certain user to the different user. This related-art technique is not able to specify the virtual machine most recently allocated to the certain user when this user logs in next time. As a result, this related-art technique requires transferring the mobile user profile from the file server, for such a user.

While the related-art technique disclosed in PTL 2 can reduce the volume of data requiring transfer from the file server to the virtual machine before the completion of the login procedure, it requires transferring the remaining layers after the completion of the login procedure. Therefore, this related-art technique requires ultimately transferring all mobile user profiles when the user logs in.

In this manner, these related-art techniques is not able to satisfactorily suppress login storms.

The present invention has been made in order to solve the above-described problems. More specifically, it is an object of the present invention to provide a technique for more satisfactorily suppressing login storms in a thin client system using a virtual machine.

### Solution to Problem

In order to achieve above-mentioned objects, a thin client system of the present invention includes: a thin client terminal; a connection management device; a virtual machine operating device on which at least one virtual machine runs; and a user profile storage device. The thin client terminal transmits information indicating a user who issues a login request to the thin client system to the connection management device upon acquiring the information, connects an own device to a virtual machine indicated by information sent from the connection management device, and allows the user to log in. The user profile storage device stores a user profile for each user of the thin client system. The connection management device includes: virtual machine selection means for selecting the virtual machine to be allocated to the user who issues the login request to the thin client system by referring to usage information indicating whether each of the at least one virtual machine is in use, and valid profile location information indicating the virtual machine saving a valid user profile for the each user; and user session management means for, upon acquiring, from the thin client terminal, information indicating the user who issues the login request to the thin client system, notifying the thin client terminal of information indicating the virtual machine selected by the virtual machine selection means, and updating the usage information and the valid profile location information according to a state of connection of the user with the virtual machine. The virtual machine includes: user profile management means for acquiring the valid user profile for the user who has logged in to an own machine from the own machine or the user profile storage device, and, when the user logs out, saving the user profile of the user used on the own machine and storing the user profile in the user profile storage device; and user connection monitoring means for monitoring the state of connection of the user with the own machine and notifying the connection management device of the state of connection of the user with the virtual machine.

A connection management device of the present invention is achieved by the connection management device in the above-mentioned thin client system above.

A virtual machine operation device of the present invention is achieved by the virtual machine operation device on which the virtual machine in the above-mentioned thin client system above.

A method of the present invention includes: transmitting, by a thin client terminal, information indicating a user who issues a login request to a thin client system to a connection management device upon acquiring the information; upon acquiring, from the thin client terminal, the information indicating the user who issues the login request to the thin client system, selecting, by the connection management device, a virtual machine to be allocated to the user who issues the login request to the thin client system by referring to usage information indicating whether each virtual machine running on a virtual machine operating device is in use, and valid profile location information indicating the virtual machine saving a valid user profile for each user of the thin client system, and notifying the thin client terminal of information indicating the selected virtual machine; connecting, by the thin client terminal, an own device to the virtual machine indicated by information sent from the connection management device and allowing the user to log in; acquiring, by the virtual machine, the valid user profile for the user who has logged in to an own machine from the own machine or a user profile storage device, and, when the user logs out, saving a user profile of the user used on the own machine and storing the user profile in the user profile storage device; monitoring, by the virtual machine, a state of connection of the user who logs in to the own machine and notifying the connection management device of the state of connection; and updating, by the connection management device, the usage information and the valid profile location information according to the state of connection of the user with the virtual machine.

Another method of the present invention includes: upon acquiring, from a thin client terminal, information indicating a user who issues a login request to a thin client system, selecting a virtual machine to be allocated to the user who issues the login request to the thin client system, by referring to usage information indicating whether each virtual machine running on a virtual machine operating device is in use, and valid profile location information indicating the virtual machine saving a valid user profile for each user of the thin client system, and connecting the thin client terminal to the selected virtual machine and allowing the user to log in, by notifying the thin client terminal of information indicating the selected virtual machine; and updating the usage information and the valid profile location information according to a state of connection of the user with the virtual machine.

Further another method of the present invention, performed by a virtual machine running on a virtual machine operating device, includes: acquiring the valid user profile for a user who has logged in to an own machine by connection from a thin client terminal from the own machine or a user profile storage device; when the user logs out, saving the user profile of the user used on the own machine and storing the user profile in the user profile storage device; and monitoring the state of connection of the user with the own machine and notifying a device which executes the above-mentioned method of the state of connection.

A storage medium of the present invention stores a program that causes a connection management device to execute: a user information acquisition step of acquiring, from a thin client terminal, information indicating a user who issues a login request to a thin client system; a virtual machine selection step of selecting a virtual machine to be allocated to the user who issues the login request to the thin client system, by referring to usage information indicating whether each virtual machine is in use, and valid profile location information indicating the virtual machine saving a valid user profile for each user of the thin client system and; a connection control step of connecting the thin client terminal to the virtual machine selected in the virtual machine selection step and allowing the user to log in, by notifying the thin client terminal of information indicating the virtual machine; and an update step of updating the usage information and the valid profile location information according to a state of connection of the user with the virtual machine.

Another storage medium of the present invention stores a program that causes a virtual machine running on a virtual machine operating device to execute: a user profile acquisition step of acquiring a valid user profile for a user who has logged in to an own machine by connection from a thin client terminal from the own machine or a user profile storage device; a user profile storage step of, when the user logs out, saving a user profile of the user used on the own machine and storing the user profile in the user profile storage device; and a connection monitoring step of monitoring the state of connection of the user with the own machine and notifying a connection management device which executes the program stored in the above-mentioned storage medium of the state of connection. Advantageous Effects of Invention

The present invention can provide a technique for more satisfactorily suppressing login storms in a thin client system using a virtual machine.

### Brief Description of Drawings

[Fig. 1] Fig. 1 is a block diagram illustrating a configuration of a thin client system according to a first example embodiment of the present invention.
[Fig. 2] Fig. 2 is a block diagram illustrating an exemplary hardware configuration of the thin client system according to the first example embodiment of the present invention.
[Fig. 3] Fig. 3 is a flowchart for explaining an operation for controlling connection from a thin client terminal to a virtual machine by the thin client system according to the first example embodiment of the present invention.
[Fig. 4] Fig. 4 is a flowchart for explaining an operation for updating usage information and valid profile location information by the thin client system according to the first example embodiment of the present invention.
[Fig. 5] Fig. 5 is a block diagram illustrating a configuration of a thin client system according to a second example embodiment of the present invention.
[Fig. 6] Fig. 6 is a table for explaining exemplary user information according to the second example embodiment of the present invention.
[Fig. 7] Fig. 7 is a table for explaining exemplary usage information according to the second example embodiment of the present invention.
[Fig. 8] Fig. 8 is a table for explaining exemplary valid profile location information according to the second example embodiment of the present invention.
[Fig. 9] Fig. 9 is a table for explaining exemplary group setting information according to the second example embodiment of the present invention.
[Fig. 10] Fig. 10 is a flowchart for explaining an operation for controlling connection from a thin client terminal to a virtual machine by the thin client system according to the second example embodiment of the present invention.
[Fig. 11] Fig. 11 is a flowchart for explaining details of an operation for selecting a virtual machine by the thin client system according to the second example embodiment of the present invention.
[Fig. 12] Fig. 12 is a flowchart for explaining details of an operation for issuing a request to delete an unnecessary user profile by the thin client system according to the second example embodiment of the present invention.
[Fig. 13] Fig. 13 is a flowchart for explaining details of an operation for deleting an unnecessary user profile by the thin client system according to the second example embodiment of the present invention.
[Fig. 14] Fig. 14 is a table for explaining usage information in Specific Examples according to the second example embodiment of the present invention.
[Fig. 15] Fig. 15 is a table for explaining valid profile location information in Specific Examples according to the second example embodiment of the present invention.
[Fig. 16] Fig. 16 is a table for explaining the usage information updated in Specific Examples according to the second example embodiment of the present invention.
[Fig. 17] Fig. 17 is a table for explaining the valid profile location information updated in Specific Examples according to the second example embodiment of the present invention.
[Fig. 18] Fig. 18 is a table for explaining the usage information further updated in Specific Examples according to the second example embodiment of the present invention.
[Fig. 19] Fig. 19 is a table for explaining the valid profile location information further updated in Specific Examples according to the second example embodiment of the present invention.
[Fig. 20] Fig. 20 is a table for explaining the usage information updated still further in Specific Examples according to the second example embodiment of the present invention.
[Fig. 21] Fig. 21 is a table for explaining the valid profile location information updated still further in Specific Examples according to the second example embodiment of the present invention.
[Fig. 22] Fig. 22 is a block diagram illustrating a configuration of a thin client system according to a third example embodiment of the present invention.
[Fig. 23] Fig. 23 is a flowchart for explaining an operation for controlling connection from a thin client terminal to a virtual machine by the thin client system according to the third example embodiment of the present invention.
[Fig. 24] Fig. 24 is a flowchart for explaining an operation for updating usage information and valid profile location information and an operation for issuing a request to delete an unnecessary user profile by the thin client system according to the third example embodiment of the present invention.
[Fig. 25] Fig. 25 is a block diagram illustrating a configuration of a thin client system according to a fourth example embodiment of the present invention.
[Fig. 26] Fig. 26 is a flowchart for explaining an overview of an operation for deleting an unnecessary user profile by the thin client system according to the fourth example embodiment of the present invention.
[Fig. 27] Fig. 27 is a flowchart for explaining details of an operation for issuing a request to delete an unnecessary user profile by the thin client system according to the fourth example embodiment of the present invention.
[Fig. 28] Fig. 28 is a flowchart for explaining details of an operation for deleting an unnecessary user profile by the thin client system according to the fourth example embodiment of the present invention.
[Fig. 29] Fig. 29 is a table for explaining usage information in Specific Examples according to the fourth example embodiment of the present invention.
[Fig. 30] Fig. 30 is a table for explaining valid profile location information in Specific Examples according to the fourth example embodiment of the present invention.
[Fig. 31] Fig. 31 is a table for explaining the valid profile location information updated in Specific Examples according to the fourth example embodiment of the present invention.

### Description of Embodiments

Example embodiments of the present invention will be described in detail below with reference to drawings.

### (First Example Embodiment)

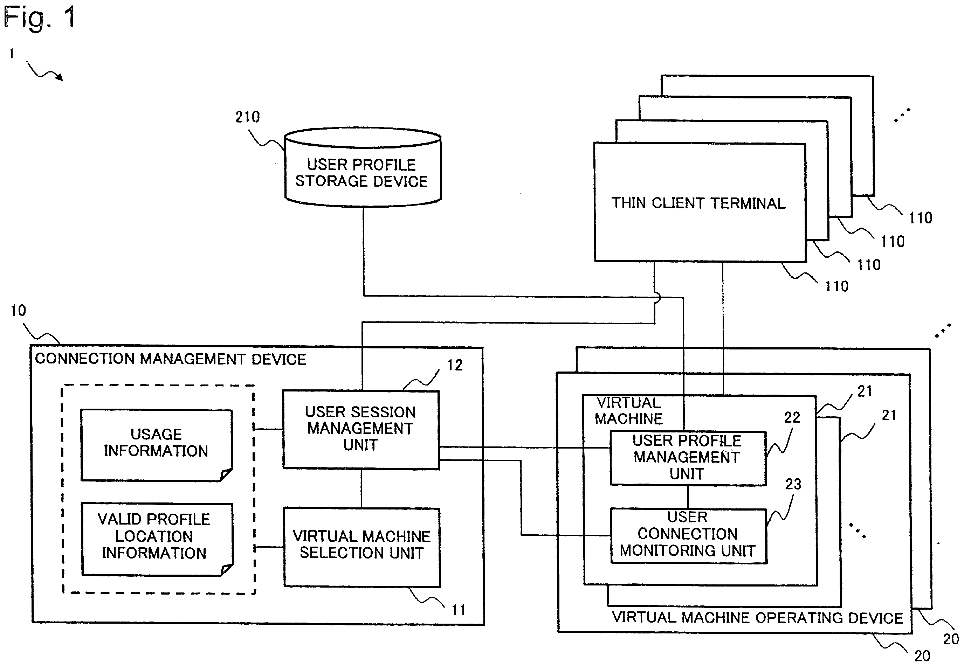

Fig. 1 illustrates a configuration of a thin client system 1 according to a first example embodiment of the present invention. Referring to Fig. 1, the thin client system 1 includes at least one thin client terminal 110, a connection management device 10, a virtual machine operating device 20, and a user profile storage device 210. At least one virtual machine 21 runs on the virtual machine operating device 20. The devices are communicably connected to each other via a network. Fig. 1 illustrates four thin client terminals 110, which are not intended to limit the number of thin client terminals included in the thin client system of the present invention. Fig. 1 also illustrates two virtual machine operating devices 20 and two virtual machines 21, which are not intended to limit any of the number of virtual machine operating devices included in the thin client system of the present invention, the number of virtual machines running on one virtual machine operating device, and the total number of virtual machines.

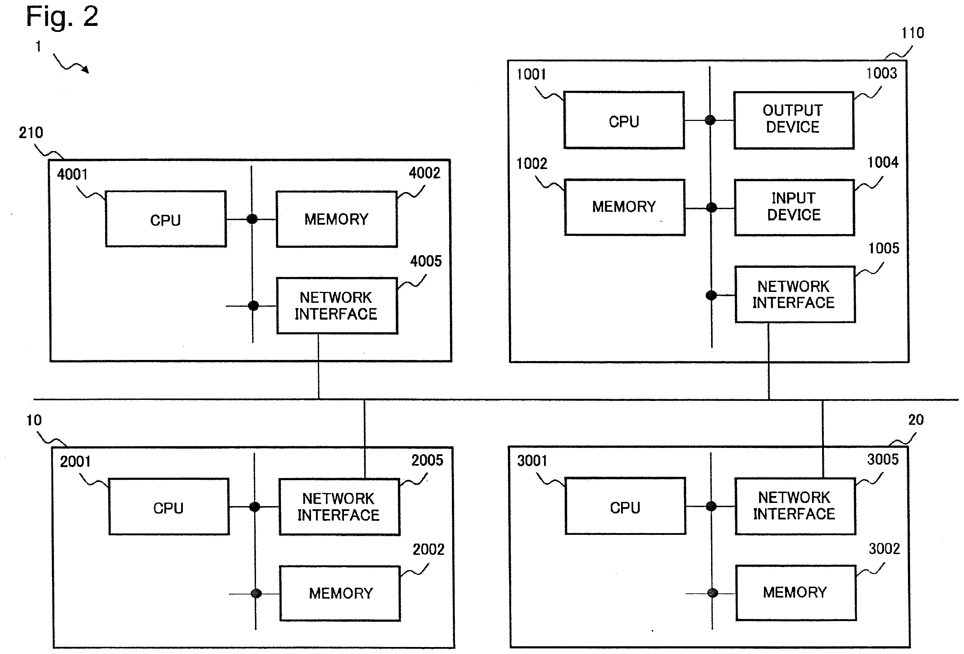

Fig. 2 illustrates an exemplary hardware configuration of the thin client system 1. Referring to Fig. 2, the thin client terminal 110 can be achieved by a computer including a CPU (Central Processing Unit) 1001, a memory 1002, an output device 1003, an input device 1004, and a network interface 1005. The memory 1002 is achieved by, for example, a RAM (Random Access Memory), a ROM (Read Only Memory), or an auxiliary storage device (for example, a hard disk). The output device 1003 is achieved by a device, such as a display or a printer, which outputs information. The input device 1004 is achieved by a device, such as a keyboard or a mouse, which receives user operation input. The network interface 1005 is connected to the network. The memory 1002 stores a computer program which implements each function of the thin client terminal 110. The CPU 1001 reads and executes the computer program stored in the memory 1002 and controls each of the devices and thereby implements the functions of the thin client terminal 110.

Referring to Fig. 2, the connection management device 10 can be achieved by a computer including a CPU 2001, a memory 2002, and a network interface 2005. The memory 2002 is achieved by, for example, a RAM, a ROM, or an auxiliary storage device. The network interface 2005 is connected to the network. The memory 2002 stores a computer program which implements each function of the connection management device 10. The CPU 2001 reads and executes the computer program stored in the memory 2002 and controls each of the devices and thereby implements the functions of the connection management device 10.

Referring again to Fig. 2, the virtual machine operating device 20 can be achieved by a computer including a CPU 3001, a memory 3002, and a network interface 3005. The memory 3002 is achieved by, for example, a RAM, a ROM, or an auxiliary storage device. The network interface 3005 is connected to the network. The memory 3002 stores virtualization software which operates at least one virtual machine 21. The CPU 3001 reads and executes a computer program stored in the memory 3002 and controls each of the devices to operate the virtual machines 21 on the virtual machine operating device 20 and implements the functions of the virtual machines 21.

Referring again to Fig. 2, the user profile storage device 210 can be achieved by a computer including a CPU 4001, a memory 4002, and a network interface 4005. The memory 4002 is achieved by, for example, a RAM, a ROM, or an auxiliary storage device. The network interface 4005 is connected to the network. The memory 4002 stores a computer program which causes the user profile storage device 210 to function as a file server. The CPU 4001 reads and executes the computer program stored in the memory 4002 and controls each of the devices to cause the user profile storage device 210 to operate as a file server.

The hardware configuration of each device implementing the thin client system 1 is not limited to the above-mentioned one.

The functional block configuration of the thin client system 1 will be described below.

The thin client terminal 110 acquires information indicating a user who issues a login request to the thin client system 1. The information indicating a user is input from, for example, the input device 1004. The thin client terminal 110 transmits the acquired information indicating a user to the connection management device 10.

The thin client terminal 110 receives information indicating a virtual machine 21 from the connection management device 10. The thin client terminal 110 connects itself to the virtual machine 21 indicated by the received information and allows the user to log in.

The user profile storage device 210 stores a user profile for each user of the thin client system 1. The user profiles are information indicating user-specific setting information when the virtual machines 21 are used.

The connection management device 10 includes a virtual machine selection unit 11 and a user session management unit 12, as illustrated in Fig. 1. The connection management device 10 saves usage information and valid profile location information as information used by each such functional block.

The usage information indicates whether each virtual machine 21 is in use. The usage information is saved in, for example, the memory 2002 as information of each virtual machine 21. More specifically, when the usage information of a certain virtual machine 21 is "in use," the certain virtual machine 21 is connected to any thin client terminal 110 and any user of the thin client system 1 is at logged in to the certain virtual machine 21. When the usage information of a certain virtual machine 21 is "available (not in use)," the certain virtual machine 21 is connected to no thin client terminal 110 and no user of the thin client system 1 is at logged in to the certain virtual machine 21.

The valid profile location information indicates a virtual machine 21 saving a valid user profile for each user of the thin client system 1. Examples of the valid user profile may include the last user profile used by the user of interest. Such a valid user profile is saved in the last virtual machine 21 used by the user. The valid profile location information is saved in, for example, the memory 2002 as user-specific information.

The virtual machine selection unit 11 refers to the usage information and the valid profile location information and thereby selects a virtual machine 21 to be allocated to a user who issues a login request to the thin client system 1. The virtual machine selection unit 11, for example, refers to the usage information and thereby extracts available virtual machines 21. The virtual machine selection unit 11 may refer to the valid profile location information and select a virtual machine 21, if any, saving a valid user profile for a user who requests login from the extracted available virtual machines 21. When such a virtual machine 21 is absent, the virtual machine selection unit 11 may select one of the available virtual machines 21.

The user session management unit 12 acquires from the thin client terminal 110, information indicating a user who issues a login request to the thin client system 1. The user session management unit 12 determine a virtual machine 21 to be allocated to the acquired information indicating a user by using the virtual machine selection unit 11. The user session management unit 12 notifies the thin client terminal 110 of information indicating the determined virtual machine 21.

The user session management unit 12 updates the usage information and the valid profile location information according to a state of connection of the user with the virtual machine 21. The state of connection (connection state) of the user is notified from the virtual machine 21.

More specifically, the user session management unit 12 updates the usage information of a login destination virtual machine 21 to information indicating "in use," as the user logs in. The user session management unit 12 further updates the usage information of the previous login destination virtual machine 21 to information indicating "not in use (that is, available)" as the user logs out.

The user session management unit 12 further updates the valid profile location information of a user to information indicating the current login destination virtual machine 21, as the user logs in. The user session management unit 12 further updates the valid profile location information of a user to information indicating the previous login destination virtual machine 21, as the user logs out. Each user may be able to concurrently log in to only one virtual machine 21. In such a case, the valid profile location information in logout is identical to that in login. In such a case, therefore, the user session management unit 12 may omit a process for updating the valid profile location information in logout. However, the valid profile location information may include accompanying information such as the update time instant. In such a case, the user session management unit 12 does not omit a process for updating the valid profile location information in logout. Each user may be able to concurrently log in to a plurality of virtual machines 21. In such a case, the valid profile location information in logout is not always identical to that in login. In such a case, therefore, the user session management unit 12 does not omit a process for updating the valid profile location information in logout.

Referring to Fig. 1, the virtual machine 21 includes a user profile management unit 22 and a user connection monitoring unit 23.

The user profile management unit 22 acquires from its own machine or the user profile storage device 210, a valid user profile for a user who has logged in to its own machine. More specifically, when a valid user profile for a user who logs in to its own machine is saved in its own machine, the user profile management unit 22 reuses the valid user profile. When no valid user profile for a user who logs in to its own machine is saved in its own machine, the user profile management unit 22 acquires a user profile for that user from the user profile storage device 210. It can be determined whether a valid profile for that user is present in its own machine by comparing a time stamp of the user profile of this user in its own machine and a time stamp of the user profile of this user in the user profile storage device 210. If the former time stamp is identical to or newer than the latter time stamp, it is determined that a valid user profile for the user is present in its own machine.

The user profile management unit 22 saves the user profile of a user used on its own machine when the user logs out from its own machine. The user profile management unit 22 stores the user profile used by the user in the user profile storage device 210.

The user connection monitoring unit 23 monitors the state of connection of the user with its own machine. Upon detecting a change in connection state, the user connection monitoring unit 23 notifies the connection management device 10 of it. More specifically, the user connection monitoring unit 23 may detect login and logout of the user and notify the connection management device 10 of it. The information to be notified includes information indicating either login or logout that has been detected, and information indicating a user who has logged in or out.

The operation of the thin client system 1 configured as above will be described below with reference to drawings.

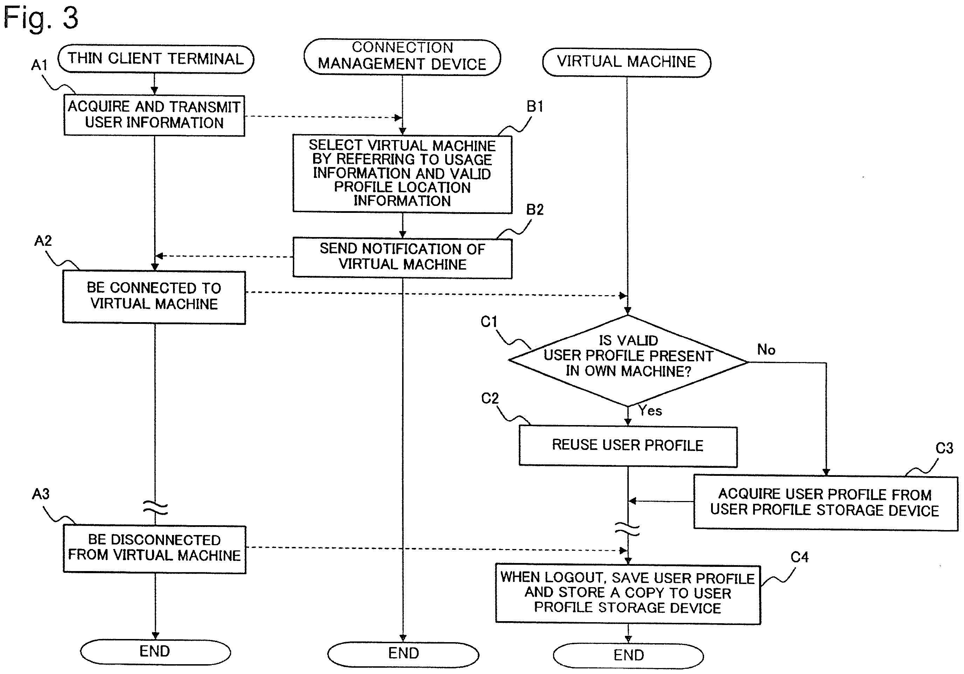

First, Fig. 3 illustrates an operation for controlling connection from the thin client terminal 110 to the virtual machine 21 by the thin client system 1.

Referring to Fig. 3, the thin client terminal 110 first acquires information indicating a user who requests login and transmits the information to the connection management device 10 (step A1).

The user session management unit 12 of the connection management device 10 selects a virtual machine 21 to be allocated to the user indicated by the received information by using the virtual machine selection unit 11 (step B1). The virtual machine selection unit 11 refers to the usage information and the valid profile location information and thereby selects a virtual machine 21 to be allocated to the user, as described earlier.

The user session management unit 12 sends notification of information indicating the virtual machine 21 selected in step B1 to the thin client terminal 110 (step B2).

The thin client terminal 110 requests the virtual machine 21 indicated by the notified information to establish a connection by the user acquired in step A1 (step A2).

The user profile management unit 22 of the virtual machine 21 determines whether a valid user profile for the user who issues a request to connect to its own machine in step A2 is present in its own machine (step C1).

If it is determined that a valid user profile for related user is present in its own machine, the user profile management unit 22 reuses the valid user profile and allows the user to log in (step C2).

If it is determined that a valid user profile for the related user is absent in its own machine, the user profile management unit 22 acquires a valid user profile for the related user from the user profile storage device 210 and allows the user to log in (step C3).

After that, when the thin client terminal 110 acquires information indicating logout, the thin client terminal 110 issues a request to disconnect to the virtual machine 21 (step A3).

The virtual machine 21 allows the user to log out and disconnects the thin client terminal 110. The user profile management unit 22 saves the user profile used by the user and stores a copy of the user profile to the user profile storage device 210 (step C4).

After the above-mentioned processes, the thin client system 1 ends its connection control operation.

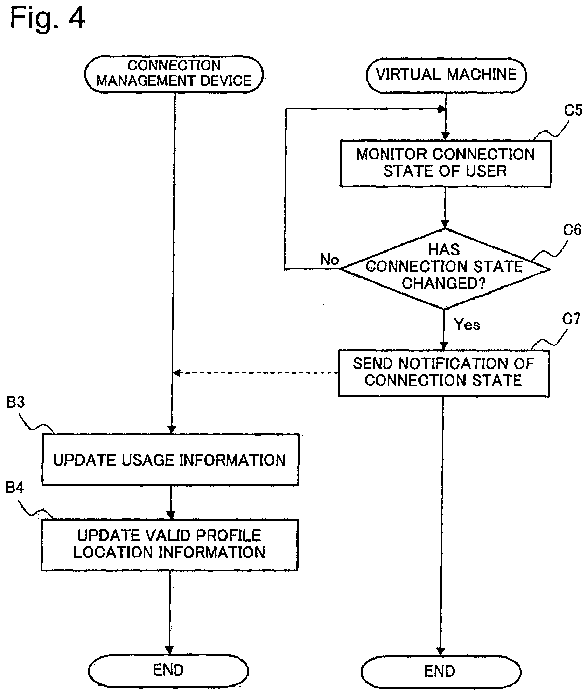

Fig. 4 illustrates an operation for updating usage information and valid profile location information by the thin client system 1.

Referring to Fig. 4, the user connection monitoring unit 23 of the virtual machine 21 first monitors a change in the state of connection of the user with its own machine (step C5).

The user connection monitoring unit 23 then determines whether the connection state has changed (step C6).

If the connection state has not changed, the user connection monitoring unit 23 repeats the operation in step C5.

If the connection state has changed, the user connection monitoring unit 23 sends notification to the connection management device 10 of the changed connection state (step C7). The user connection monitoring unit 23 may detect login or logout as the connection state of the user, as described earlier. The user connection monitoring unit 23 may send information indicating either login or logout detected, and information indicating a user who has logged in or out.

In the connection management device 10, the user session management unit 12 updates the usage information of a notification source virtual machine 21, on the basis of the notified connection state (step B3).

More specifically, if login has been notified, the user session management unit 12 updates the usage information of the notification source virtual machine 21 to information indicating "in use." If logout has been notified, the user session management unit 12 updates the usage information of the notification source virtual machine 21 to information indicating "available."

The user session management unit 12 further updates the valid profile location information of the notified user to information indicating the notification source virtual machine 21, on the basis of the notified connection state (step B4).

After the above-mentioned processes, the thin client system 1 ends its update operation.

The effect of the first example embodiment of the present invention will be described below.

In the first example embodiment of the present invention, login storms can be more satisfactorily suppressed in a thin client system using a virtual machine.

The reason will be given hereinafter. In this example embodiment, the connection management device saves usage information indicating whether each virtual machine is in use, and valid profile location information indicating a virtual machine saving a valid user profile for each user of the thin client system. The virtual machine selection unit of the connection management device selects a virtual machine to be allocated to a user who requests login from the thin client terminal, on the basis of the usage information and the valid profile location information. The user session management unit of the connection management device notifies the thin client terminal of the machine selected by the virtual machine selection unit and thereby allows the user to log in to the selected virtual machine from the thin client terminal. The user session management unit of the connection management device updates the usage information and the valid profile location information according to the state of connection of the user with the virtual machine. The virtual machine reuses a valid user profile for a user who logs in when it is present in its own machine, or otherwise acquires from the user profile storage device when it is absent.

In this manner, according to this example embodiment, a virtual machine holding the latest user profile of a user who issues a login request to the thin client system can be preferentially allocated to the user. According to this example embodiment, in a virtual machine to which a user has logged in, a valid user profile for the user can be more likely to be reused. As a result, according to this example embodiment, when a user logs in, the rate of occurrence of storing copies of his or her user profile on the user profile storage device onto the virtual machine can be reduced to suppress login storms.

### (Second Example Embodiment)

A second example embodiment of the present invention will be described in detail below with reference to drawings. In the drawings referred to in description of this example embodiment, the same reference numerals denote the same components and steps for the same operations as in the first example embodiment of the present invention, and a detailed description thereof will not be given in this example embodiment.

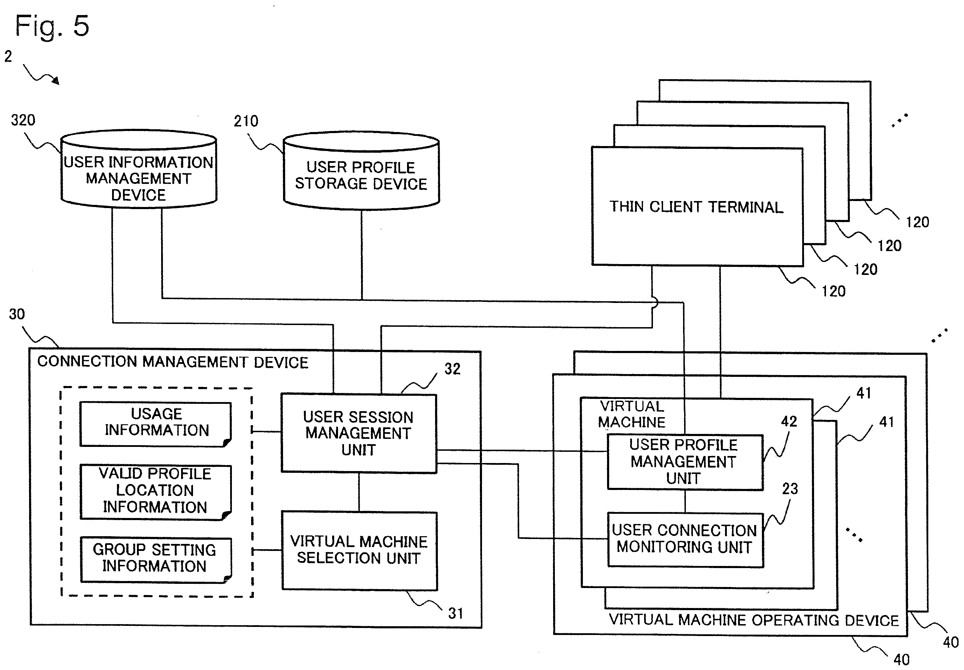

First, Fig. 5 illustrates a configuration of a thin client system 2 according to the second example embodiment of the present invention. Referring to Fig. 5, compared to the thin client system 1 according to the first example embodiment of the present invention, the thin client system 2 includes a thin client terminal 120 in place of the thin client terminal 110. The thin client system 2 further includes a connection management device 30 in place of the connection management device 10, and a virtual machine operating device 40 in place of the virtual machine operating device 20. At least one virtual machine 41 runs on the virtual machine operating device 40. The thin client system 2 further includes a user information management device 320. The devices are communicably connected to each other via a network.

The thin client terminal 120, the connection management device 30, and the virtual machine operating device 40 can be achieved by computers including the same hardware components as in the first example embodiment of the present invention described with reference to Fig. 2. The user information management device 320 can be achieved by a computer including a CPU, a memory, and a network interface. In this case, the CPU reads a computer program stored in the memory, executes the computer program, controls each of the devices and thereby implements the functions of the user information management device 320. The hardware configuration of the thin client system 2 is not limited to the above-mentioned configuration.

The thin client terminal 120 acquires authentication information of a user who issues a login request to the thin client system 2. The authentication information includes, for example, the user ID and the password. The authentication information of the user is input from, for example, an input device 1004. The thin client terminal 120 transmits the acquired authentication information to the connection management device 30.

The thin client terminal 120 receives information indicating a virtual machine 41 from the connection management device 30. The thin client terminal 120 transmits authentication information to the virtual machine 41 indicated by the received information. When authentication is successfully performed by the virtual machine 41, the thin client terminal 120 is connected to the virtual machine 41 so that the user logs in.

The user information management device 320 stores user information. The user information includes information indicating a storage location of the user profile on a user profile storage device 210, for each user of the thin client system 2. The user information may include authentication information (for example, the user name and the password) used when each user uses the thin client system 2. When users who use the thin client system 2 are managed in groups, the user information may include information indicating groups to which users belong.

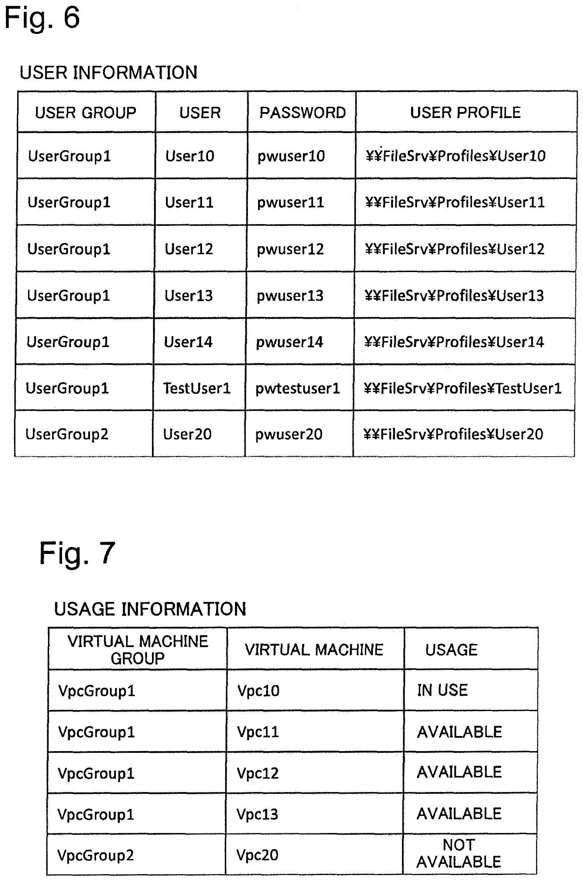

Fig. 6 illustrates exemplary user information stored in the user information management device 320. Referring to Fig. 6, the user information includes pieces of information indicating the user name, the storage location of the user profile, the password, and the user group name. The first row, for example, represents that user "User10" belongs to user group "UserGroup1," and has password "pwuser10" and his or her user profile stored at "¥¥FileSrv¥Profiles¥User10." User "User10" represents a user who uses "User10" as his or her user name.

The user information management device 320 receives a query using authentication information from the connection management device 30 or the virtual machine 41. The user information management device 320 searches for user information matching the received authentication information and sends information included in the user information in search result as a response. For example, the user information management device 320 receives a query of a user group relevant to the authentication information of the user from the connection management device 30. In this case, the user information management device 320 searches for user information matching the received authentication information and sends a user group included in the user information in search result as a response. In another example, the user information management device 320 receives a query of a storage location of the user profile relevant to the authentication information of the user from the virtual machine 41. In this case, the user information management device 320 searches for user information matching the received authentication information and sends the storage location of the user profile included in the user information in search result as a response.

The connection management device 30 includes a virtual machine selection unit 31 and a user session management unit 32, as illustrated in Fig. 5.

The virtual machine selection unit 31 refers to usage information, valid profile location information, and group setting information, and thereby selects a virtual machine 41 to be allocated to a user who requests login.

The usage information includes not only the same usage information as in the first example embodiment of the present invention, but also information indicating a virtual machine group. This example embodiment assumes that the virtual machines 41 are managed in groups. Fig. 7 illustrates exemplary usage information. Referring to Fig. 7, the usage information includes pieces of information indicating the virtual machine name, the virtual machine group name, and either "in use" or "not in use." The first row, for example, represents that virtual machine 41 "Vpc10" belongs to virtual machine group "VpcGroup1" and is "in use" by any user. Virtual machine 41 "Vpc10" represents a virtual machine 41 having "Vpc10" as its name. The second row represents that virtual machine 41 "Vpc11" belongs to virtual machine group "VpcGroup1" and is "available," which means it is not in use by any user. The usage information may include information indicating "not available" for the virtual machine 41, as represented on the fifth row. In this manner, the usage information of a virtual machine 41 which is not able to be used due to any external factor, other than whether or not the virtual machine 41 is in use by any user, may be set "not available" by an external functional block.

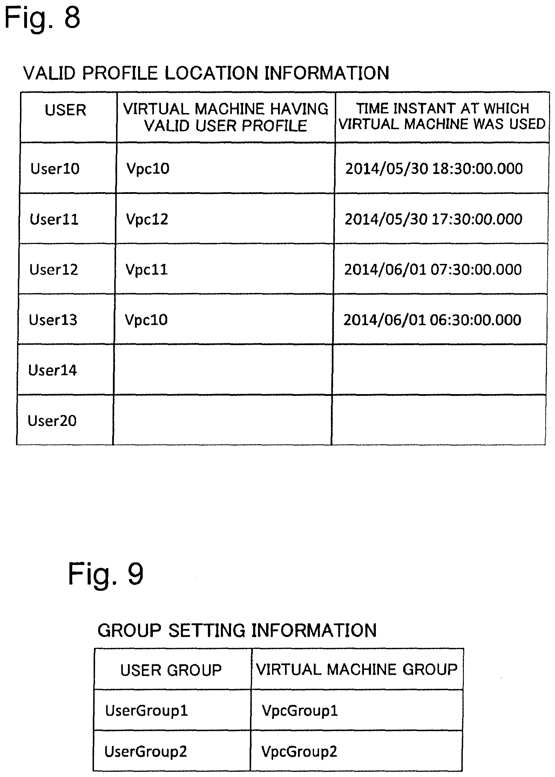

The valid profile location information includes not only the same valid profile location information as in the first example embodiment of the present invention, but also information indicating the use time instant. The use time instant represents the latest time instant at which the user is confirmed to have used his or her valid user profile in a virtual machine 41 saving the valid user profile. In practice, a time instant based on the login or logout time instant is recorded as the use time instant. Fig. 8 illustrates exemplary valid profile location information. Referring to Fig. 8, the valid profile location information includes pieces of information indicating the user name, the name of a virtual machine having a valid user profile, and the use time instant. The first row, for example, represents that the virtual machine 41 having a valid user profile for user "User10" is "Vpc10," which was used at time instant "2014/05/30 18:30:00.000."

The group setting information includes information indicating the relation between a user group and a virtual machine group which is available to users belonging to the user group. Fig. 9 illustrates exemplary group setting information. Referring to Fig. 9, the group setting information includes the user group name and the virtual machine group name. The first row, for example, represents that users belonging to user group "UserGroup1" can use virtual machines 41 belonging to virtual machine group "VpcGroup1." User group "UserGroup1" represents a user group having "UserGroup1" as its name. Virtual machine group "VpcGroup1" represents a virtual machine group having "VpcGroup1" as its name. This example embodiment assumes that the users and the virtual machines 41 are managed in groups, as described earlier. However, the group setting information may be omitted when the users and the virtual machines 41 are not managed in groups.

The virtual machine selection unit 31 refers to the group setting information and thereby specifies a virtual machine group relevant to a user group including a user who requests login. The virtual machine selection unit 31 further refers to the usage information and thereby extracts available virtual machines 41 from virtual machines 41 belonging to the specified virtual machine group. The virtual machine selection unit 31 refers to the valid profile location information, and selects a virtual machine 41 saving a valid user profile for the user who requests login when such a virtual machine 41 is present in the extracted available virtual machines 41.

When a virtual machine 41 saving such a valid user profile is absent, the virtual machine selection unit 31 selects a virtual machine 41 saving no valid user profile for any user from the extracted available virtual machines 41. Such a virtual machine 41 can be specified by referring to the valid profile location information. In other words, the virtual machine selection unit 31 may select a virtual machine 41 which is not included in the column of "Virtual Machine Having Valid User Profile" in the valid profile location information illustrated as an example in Fig. 8 of the extracted available virtual machines 41.

Assume herein that a plurality of applicable virtual machines 41 are present, that is, a plurality of virtual machines 41 save no valid user profiles for any users. In such a case, the virtual machine selection unit 31 may select the first virtual machine 41 confirmed to "save no valid user profile for any user" of the plurality of applicable virtual machines 41.

Alternatively, the virtual machine selection unit 31 may select a virtual machine 41 using a condition based on a last-used time instant from the plurality of applicable virtual machines 41. In such a case, the last-used time instant can be specified by referring to a record of the valid profile location information. More specifically, for each applicable virtual machine 41, the virtual machine selection unit 31 may retrieve, in the valid profile location information illustrated in Fig. 8, a record in "use time instant" in a row including the applicable virtual machine 41 in "Virtual Machine Having Valid User Profile". For a virtual machine 41 holding a plurality of records (use time instants) in "Virtual Machine Having Valid User Profile," the latest use time instant of the use time instants may be set as the last-used time instant of the virtual machine 41.

In this case, the virtual machine selection unit 31 may set a plurality of selection conditions based on the last-used time instant. More specifically, the following stepwise conditions may be set:
- Condition 1: Select a virtual machine whose last-used time instant is the earliest from virtual machines whose elapsed time from last-used time instant until the current time instant is equal to or longer than t1 (t1: positive number).
- Condition 2: Select a virtual machine whose last-used time instant is the latest from virtual machines whose elapsed time from last-used time instant until the current time instant falls within t2 (inclusive) and t1 (exclusive) (t2: positive number where t1 > t2).
- Condition 3: Select a virtual machine whose last-used time instant is the earliest when no virtual machine's elapsed time is equal to or longer than t2.
In this example, the virtual machine selection unit 31 performs selection based on condition 1, performs selection based on condition 2 when no virtual machine satisfies condition 1, and performs selection based on condition 3 when no virtual machine satisfies condition 2. In this manner, a variety of selection conditions according to the operational circumstances can be set by changing the selection condition on the basis of the time elapsed from the last-used time instant until the current time instant.

Alternatively, the virtual machine selection unit 31 may select a virtual machine 41 from the plurality of applicable virtual machines 41 under a condition based on the load on the virtual machine operating device 40 on which the virtual machine 41 runs. Or, the virtual machine selection unit 31 may select a virtual machine 41 from the plurality of applicable virtual machines 41 under a condition based on the load on a storage used by the virtual machine 41. The virtual machine selection unit 31 may randomly select one of the plurality of applicable virtual machines 41. The virtual machine selection unit 31 may select one virtual machine 41 using the above-mentioned selection conditions in combination.

Assume that a virtual machine 41 saving a valid user profile for related user is absent in the extracted available virtual machines 41, and a virtual machine 41 saving no valid user profile for any user is also absent. In other words, assume that every extracted available virtual machine 41 saves a valid user profile for any user other than the related user. In such a case, the virtual machine selection unit 31 may select one of the extracted available virtual machines 41.

In this case, the virtual machine selection unit 31 may select a virtual machine 41 using the above-mentioned conditions based on the last-used time instant from the extracted available virtual machines 41. Alternatively, the virtual machine selection unit 31 may select one virtual machine 41 using a method for selection based on the load on the virtual machine operating device 40, selection based on the load on the storage, random selection, selection which uses a plurality of selection conditions in combination, or the like, as described above.

The user session management unit 32 acquires from the thin client terminal 120, authentication information of a user who issues a login request to the thin client system 2. The user session management unit 32 inquires of the user information management device 320 using the acquired authentication information and thereby acquires a user group including that user. The user session management unit 32 determines a virtual machine 41 to be allocated to that user by using the virtual machine selection unit 31.

The user session management unit 32 notifies the thin client terminal 120 of information indicating the determined virtual machine 41, like the user session management unit 12 according to the first example embodiment of the present invention.

The user session management unit 32 requests the virtual machine 41 which is a target for a request to delete an unnecessary user profile, to delete an unnecessary user profile. The target for a request to delete will also be hereinafter referred to as the delete request target. More specifically, the user session management unit 32 refers to the valid profile location information and thereby specifies a user having his or her valid user profile saved in the virtual machine 41 which is the delete request target. The user session management unit 32 notifies the virtual machine 41 which is the delete request target of the specified user as a user to be excluded from targets for user profile deletion. The user session management unit 32 requests the virtual machine 41 which is the delete request target to perform a process for deleting an unnecessary user profile. The user session management unit 32 may, for example, transmit information indicating a request for deletion, as well as information indicating the user to be excluded, to the virtual machine 41 which is the delete request target.

This example embodiment assumes that at timing when a virtual machine 41 is allocated to a user who requests login, the allocated virtual machine 41 is requested to perform a deletion process. In other words, in this example embodiment, the virtual machine 41 selected by the virtual machine selection unit 31 is set as the delete request target. In this case, the user session management unit 32 adds the user who requests login as a user to be excluded. The user session management unit 32 may request the selected virtual machine 41 to perform a deletion process upon setting as users to be excluded the user having his or her valid user profile saved in the virtual machine 41 which is the delete request target and the user who requests login.

Assume herein that a virtual machine 41 saving a valid user profile for the user who requests login has been selected. In this case, the "user having his or her valid user profile saved in the selected virtual machine 41" is identical to the user who requests login. In this case, therefore, the user session management unit 32 may omit a process for specifying a user to be excluded. Or, assume that a virtual machine 41 saving a valid user profile for the user who requests login is absent in the available virtual machines 41, and another virtual machine 41 has been selected. In this case, the user having his or her valid user profile saved in the selected virtual machine 41 is different from the user who requests login. In this case, therefore, a process for specifying a user to be excluded is necessary. Or, assume that a virtual machine 41 saving a valid user profile for the user who requests login is absent in the available virtual machines 41, and a virtual machine 41 saving no valid user profile for any user has been selected. In this case, no valid user profile is known to have been saved in the selected virtual machine 41. In this case, therefore, the user session management unit 32 may omit a process for specifying a user to be excluded.

The virtual machine 41 includes a user profile management unit 42 and a user connection monitoring unit 23, as illustrated in Fig. 5.

The user profile management unit 42 acquires authentication information of the user from the thin client terminal 120. The user profile management unit 42 inquires of the user information management device 320 using the acquired authentication information and thereby acquires a storage location of the user profile for the user. The user profile management unit 42 acquires a user profile for the user from the user profile storage device 210 or its own machine.

More specifically, the user profile management unit 42 acquires the time stamp of the user profile located at the above-referenced storage location on the user profile storage device 210. The user profile management unit 42 acquires the time stamp of the user profile of related user saved in its own machine. The user profile management unit 42 may acquire the newer user profile. When these time stamps are identical to each other, the user profile management unit 42 reuses the user profile in its own machine.

The user profile management unit 42 receives a request to delete an unnecessary user profile from the connection management device 30. The user profile management unit 42 deletes the saved unnecessary user profile for a user other than a user who has logged in to its own machine, a user requesting login, and a notified user to be excluded. The user profiles of users other than the user set to log in from the thin client terminal 120 to the thin client system 2 are excluded from deletion targets.

The operation of the thin client system 2 configured as above will be described below with reference to drawings.

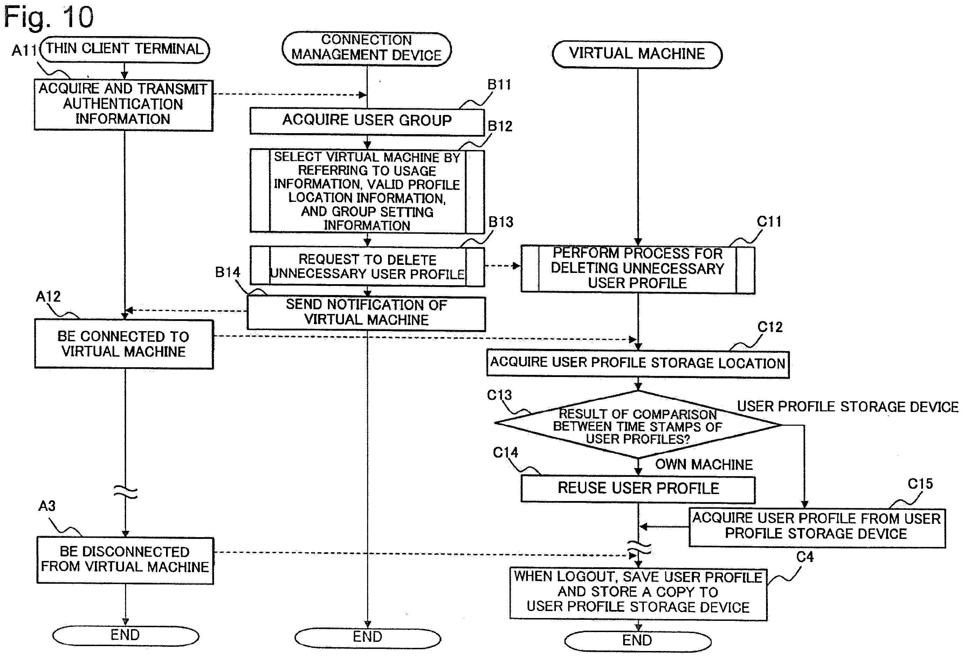

First, Fig. 10 illustrates an overview of an operation for controlling connection from the thin client terminal 120 to the virtual machine 41 by the thin client system 2.

Referring to Fig. 10, the thin client terminal 120 first acquires and transmits authentication information of a user who requests login to the connection management device 30 (step A11).

The user session management unit 32 of the connection management device 30 then acquires a user group name relevant to the received authentication information from the user information management device 320 (step B11).

The virtual machine selection unit 31 selects a virtual machine 41 to be allocated to the user indicated by the authentication information by referring to usage information, valid profile location information, and group setting information (step B12). This step will be described in detail later.

The user session management unit 32 requests the virtual machine 41 selected in step B12 to delete an unnecessary user profile (step B13). This step will be described in detail later.

In the virtual machine 41 having requested to delete, the user profile management unit 42 deletes an unnecessary user profile (step C11). This step will be described in detail later.

The user session management unit 32 sends notification of information indicating the virtual machine 41 selected in step B12 to the thin client terminal 120 (step B14).

The thin client terminal 120 requests the virtual machine 41 indicated by the notified information to establish a connection using the authentication information acquired in step A11 (step A12).

The user profile management unit 42 of the virtual machine 41 acquires from the user information management device 320, a storage location of the user profile relevant to the authentication information of the user who requests its own machine to establish a connection (step C12).

The user profile management unit 42 compares the time stamp of the user profile in the user profile storage device 210 located at the storage location acquired in step C12 with that of the user profile of related user in its own machine (step C13).

The case where the time stamp of the user profile in its own machine is identical to or newer than that of the user profile in the user profile storage device 210 will be described herein. In this case, the user profile management unit 42 reuses the user profile in its own machine and allows the user to login (step C14).

The case where the time stamp of the user profile in the user profile storage device 210 is newer will be described herein. When the user profile of the related user is absent in its own machine, the user profile management unit 42 determines that the time stamp of the user profile in the user profile storage device 210 is newer. In this case, the user profile management unit 42 acquires a user profile from the storage location on the user profile storage device 210 acquired in step C12 and allows the user to log in (step C15).

After that, when the user logs out, the thin client system 2 executes steps A3 and C4, as in the first example embodiment of the present invention. Thus, the user profile used on the virtual machine 41 by the user is saved in the virtual machine 41 and the copy of the user profile is stored onto the user profile storage device 210.

After the above-mentioned processes, the thin client system 2 ends its operation for controlling connection.

An operation for updating usage information and valid profile location information by the thin client system 2 will be described below. The operation for updating usage information and valid profile location information by the thin client system 2 is nearly similar to that in the first example embodiment of the present invention described with reference to Fig. 4. However, details of an operation for updating the valid profile location information in step B4 differ.

In step B4, the user session management unit 32 updates the information of "Virtual Machine Having Valid User Profile" to information indicating a notification source virtual machine 41, in the valid profile location information of the user whose connection state has been notified. The user session management unit 32 further updates the information of "Use Time Instant" in the valid profile location information of the user whose connection state has been notified. The use time instant to be updated may be the current time instant at the point in time of execution of this process. Alternatively, the use time instant to be updated may be the time instant at which a change in connection state is detected in the virtual machine 41. In this case, in step C7, the user connection monitoring unit 23 of the virtual machine 41 may send notification of the detection time instant, as well as information indicating the connection state and the user, to the connection management device 30.

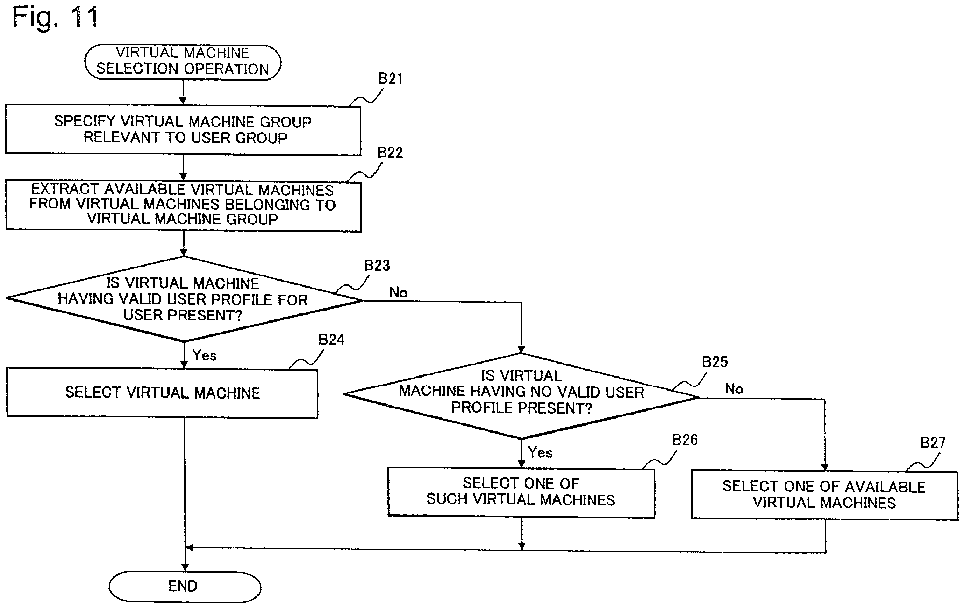

An operation for selecting a virtual machine by the connection management device 30 in step B12 of Fig. 10 will be described in detail below with reference to Fig. 11.

Referring to Fig. 11, the virtual machine selection unit 31 of the connection management device 30 first specifies a virtual machine group relevant to the user group specified in step B11 (step B21) by referring to the group setting information.

The virtual machine selection unit 31 then extracts available virtual machines 41 from virtual machines 41 belonging to the virtual machine group specified in step B21 by referring to the usage information (step B22).

The virtual machine selection unit 31 determines whether a virtual machine 41 saving a valid user profile for the user indicated by the authentication information is present in the virtual machines 41 extracted in step B22, by referring to the valid profile location information (step B23).

The case where it is determined that a virtual machine 41 saving a valid user profile for related user is present will be described herein. In this case, the virtual machine selection unit 31 selects the virtual machine 41 (step B24).

The case where it is determined that a virtual machine 41 saving a valid user profile for the related user is absent will be described herein. In this case, the virtual machine selection unit 31 determines whether a virtual machine 41 saving no valid user profile for any user is present in the virtual machines 41 extracted in step B22 (step B25).

The case where it is determined that a virtual machine 41 saving no valid user profile for any user is present will be described herein. In this case, the virtual machine selection unit 31 selects the virtual machine 41 (step B26). If a plurality of the virtual machines 41 are applicable, the virtual machine selection unit 31 may select one of them. In selection, a condition based on the last-used time instant of each virtual machine 41, or a condition based on the load on the virtual machine operating device 40, the load on the storage, or the like may be used, as described earlier. Alternatively, the virtual machine selection unit 31 may randomly select one of the plurality of the virtual machines 41 applicable, as described earlier.

The case where it is determined that a virtual machine 41 saving no valid user profile for any user is absent will be described herein. It means the case where every virtual machine 41 extracted in step B22 saves a valid user profile for any user other than the related user. In this case, the virtual machine selection unit 31 selects one of the virtual machines 41 extracted in step B22 (step B27). If a plurality of the virtual machines 41 are applicable, the virtual machine selection unit 31 may select one of the plurality of the virtual machines 41 extracted in step S22. In selection, a condition based on the last-used time instant of each virtual machine 41, or a condition based on the load on the virtual machine operating device 40, the load on the storage, or the like may be used, as described earlier. Alternatively, the virtual machine selection unit 31 may randomly select one of the plurality of the virtual machines 41 applicable, as described earlier.

A detailed description of the operation in step B12 has been given above.

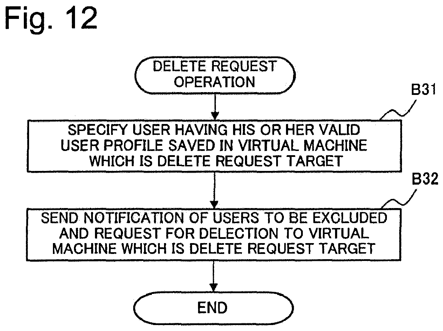

An operation for issuing a request to delete an unnecessary user profile by the connection management device 30 in step B13 of Fig. 10 will be described in detail below with reference to Fig. 12.

Referring to Fig. 12, the user session management unit 32 of the connection management device 30 first specifies a user having his or her valid user profile saved in a virtual machine 41 which is the delete request target (step B31) by referring to the valid profile location information. The virtual machine 41 selected in step B12 is applied to the virtual machine 41 which is the delete request target.

The user session management unit 32 then sets the user indicated by the received authentication information and the user specified in step B31 as users to be excluded. The user session management unit 32 sends notification of the information of the users to be excluded to the virtual machine 41 which is the delete request target and requests it to delete an unnecessary user profile (step B32).

A detailed description of the operation in step B13 has been given above.

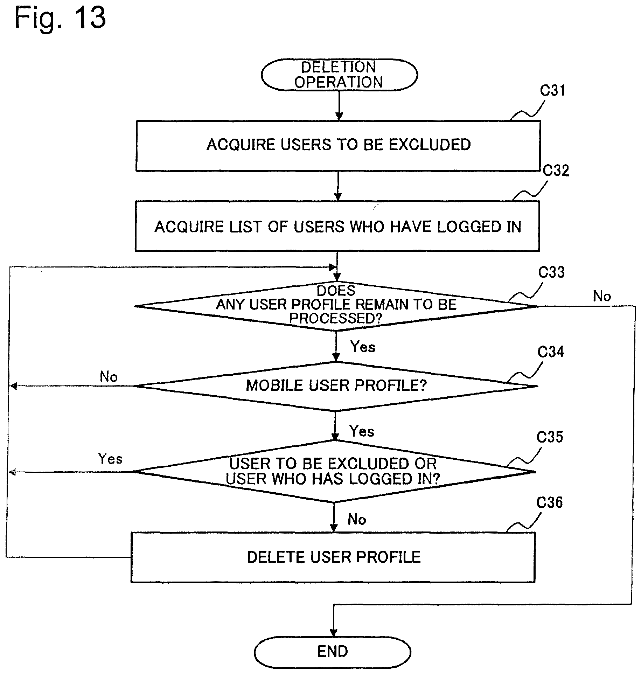

An operation for deleting an unnecessary user profile by the virtual machine 41 in step C11 of Fig. 10 will be described in detail below with reference to Fig. 13.

Referring to Fig. 13, the user profile management unit 42 of the virtual machine 41 first acquires the information of the users to be excluded which the notification from the connection management device 30 indicates (step C31).

The user profile management unit 42 then acquires a list of users who have logged in to its own machine (step C32).

The user profile management unit 42 determines whether any user profile saved in its own machine remains to be processed (step C33).

If no user profile remains to be processed, the user profile management unit 42 ends its deletion operation.

The case where any user profile remains to be processed will be described herein. In this case, the user profile management unit 42 determines whether one of such user profiles is a mobile user profile (step C34).

"(The) user profile is a mobile user profile" means that this user profile is exchanged with the user profile management device 40. The virtual machines 41 may not save the user profiles of exceptional users (for example, guest users, test users, or administrative users) as mobile user profiles, but save them in themselves.

If the user profile is not a mobile user profile, the user profile management unit 42 repeats the process in step C33 for the remaining user profiles to be processed.

If the user profile is a mobile user profile, the user profile management unit 42 determines whether or not the user having this user profile is the user to be excluded acquired in step C31 or the logged-in user acquired in step C32 (step C35).

If this user profile is of the user to be excluded or the logged-in user, the user profile management unit 42 repeats the processes in step C33 and a subsequent step for the remaining user profiles to be processed.

If this user profile is of neither the user to be excluded nor the logged-in user, the user profile management unit 42 deletes this user profile (step C36).

The user profile management unit 42 then repeats the processes in step C33 and subsequent steps for the remaining user profiles to be processed.

A detailed description of the operation in step C11 has been given above.

Specific Examples of the operation of the thin client system 2 will be described below.

### <Specific Example 1>

The case where user "User10" establishes a connection with the virtual machine 41 will be described first with reference to Figs. 10 to 13 and 4. Assume herein that the user information management device 320 stores the user information illustrated in Fig. 6. Assume also that the connection management device 30 saves the usage information illustrated in Fig. 7, the valid profile location information illustrated in Fig. 8, and the group setting information illustrated in Fig. 9.

The thin client terminal 120 first acquires user name "User10" and password "pwuser10" from the input device 1004 as authentication information.

The thin client terminal 120 transmits the acquired authentication information to the connection management device 30 (step A11 in Fig. 10).

The user session management unit 32 of the connection management device 30 then acquires user name "User10" and password "pwuser10" from the thin client terminal 120 as authentication information.

The user session management unit 32 transmits the authentication information to the user information management device 320 and acquires user group name "UserGroup1" as a relevant user information in Fig. 6 (step B11).

The virtual machine selection unit 31 selects a virtual machine 41 to be allocated to user "User10" using the usage information, the valid profile location information, and the group setting information (step B12).

More specifically, the virtual machine selection unit 31 refers to the group setting information illustrated in Fig. 9 and specifies virtual machine group "VpcGroup1" relevant to user group "UserGroup1" (step B21 in Fig. 11).

The virtual machine selection unit 31 refers to the usage information illustrated in Fig. 7 and extracts "Vpc11," "Vpc12," and "Vpc13" as available virtual machines 41 of virtual machines 41 belonging to virtual machine group "VpcGroup1" (step B22).

The virtual machine selection unit 31 refers to the valid profile location information illustrated in Fig. 8 and acquires "Vpc10" as a virtual machine 41 saving a valid user profile for user "User10." The virtual machine selection unit 31 determines that such virtual machine 41 "Vpc10" is absent in available virtual machines 41 "Vpc11," "Vpc12," and "Vpc13" (No in step B23).

The virtual machine selection unit 31 therefore determines whether a virtual machine 41 saving no valid user profile for any user is present in available virtual machines 41 "Vpc11," "Vpc12," and "Vpc13" (step B25).

On the column of "Virtual Machine Having Valid User Profile" in the valid profile location information illustrated in Fig. 8, "Vpc11" and "Vpc12" are specified while "Vpc13" is not specified. The virtual machine selection unit 31 therefore determines that "Vpc13" is present as a virtual machine 41 saving no valid user profile in available virtual machines 41 "Vpc11," "Vpc12," and "Vpc13" (Yes in step B25).

The virtual machine selection unit 31 therefore selects one of such virtual machines 41. Since only one virtual machine 41 "Vpc13" saves no valid user profile, the virtual machine selection unit 31 may select "Vpc13" (step B26).

In this way, virtual machine 41 "Vpc13" is selected in step B12 of Fig. 10.

The user session management unit 32 requests selected virtual machine 41 "Vpc13" to delete an unnecessary user profile (step B13).

More specifically, the user session management unit 32 refers to the valid profile location information illustrated in Fig. 8 and acquires a user having his or her valid user profile saved in selected virtual machine 41 "Vpc13" (step B31 in Fig. 12).

In this case, virtual machine 41 "Vpc13" saves no valid user profile for any user. The user session management unit 32 therefore acquires no information indicating a user in this step.

The user session management unit 32 sets user "User10" who requests login as a user to be excluded, because no user is specified in step B31. The user session management unit 32 sends notification of the information of user "User10" to be excluded to selected virtual machine 41 "Vpc13" and requests it to delete an unnecessary user profile (step B32).

The user profile management unit 42 of virtual machine 41 "Vpc13" deletes an unnecessary user profile (step C11 in Fig. 10).

More specifically, the user profile management unit 42 acquires the information of "User10" as a user to be excluded (step C31 in Fig. 13).

The user profile management unit 42 acquires a list of users who have logged in to its own machine "Vpc13" (step C32).

Assume herein that no user has logged in.

The user profile management unit 42 determines whether any user profile saved in its own machine "Vpc13" remains to be processed. Assume herein that the user profile of "Administrator" remains to be processed (Yes in step C33).

The user profile management unit 42 then determines that the user profile of "Administrator" is not a mobile user profile (No in step C34).

The user profile management unit 42 returns to step C33 without deleting the user profile of "Administrator."

The user profile management unit 42 determines that no user profile saved in its own machine "Vpc13" remains to be processed (No in step C33).

In this way, in step C11 of Fig. 10, deletion is not performed in selected virtual machine 41 "Vpc13" because of the absence of an unnecessary user profile.

The user session management unit 32 of the connection management device 30 sends notification of selected virtual machine 41 "Vpc13" to the thin client terminal 120 (step B14 in Fig. 10).

The thin client terminal 120 transmits user name "User10" and password "pwuser10" to notified virtual machine 41 "Vpc13" as authentication information and requests it to establish a connection (step A12).

The user profile management unit 42 of virtual machine 41 "Vpc13" acquires authentication information from the thin client terminal 120. The user profile management unit 42 acquires "¥¥FileSrv¥Profiles¥User10" as a storage location of the user profile relevant to the authentication information of user "User10" in Fig. 6 from the user information management device 320 (step C12).

Since the user profile of user "User10" is absent in its own machine, the user profile management unit 42 determines that the user profile in the user profile storage device 210 is newer ("User Profile Storage Device" in step C13).

The user profile management unit 42 therefore acquires a copy of a user profile from "¥¥FileSrv¥Profiles¥User10" on the user profile storage device 210 and allows "User10" to log in (step C15).

The user connection monitoring unit 23 of virtual machine 41 "Vpc13" detects a change in connection state, in which user "User10" has logged in to its own machine "Vpc13" (step C5 and Yes in step C6 of Fig. 4).

The user connection monitoring unit 23 sends notification that user "User10" has logged in to virtual machine 41 "Vpc13" as a connection state to the connection management device 30 (step C7).

The user session management unit 32 of the connection management device 30 receives a notification of the connection state. The user session management unit 32 updates the usage information of the virtual machine 41 "Vpc13." More specifically, the user session management unit 32 updates "Usage" to "In Use" on the fourth row of Fig. 7 (step B3).

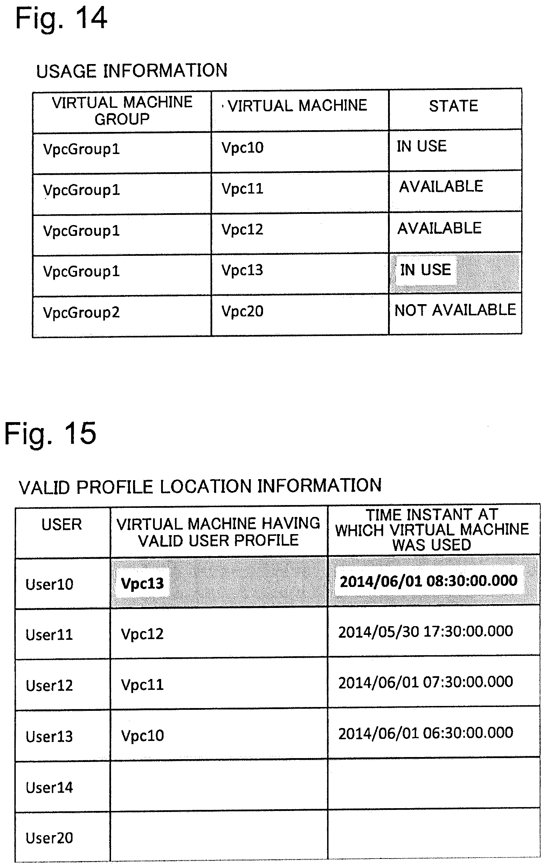

By this operation, the usage information is updated from the contents illustrated in Fig. 7 to those illustrated in Fig. 14.

The user session management unit 32 updates the valid profile location information of the user "User10." More specifically, the user session management unit 32 updates "Virtual Machine Having Valid User Profile" to "Vpc13" on the first row of Fig. 8. The user session management unit 32 updates "Use Time Instant" to the current time instant "2014/06/01 08:30:00.000" on the first row of Fig. 8.

By this operation, the valid profile location information is updated from the contents illustrated in Fig. 8 to those illustrated in Fig. 15.

### <Specific Example 2>

The case where user "User11" establishes a connection with the virtual machine 41 will be described next with reference to Figs. 10 to 13 and 4. Assume herein that the user information management device 320 stores the user information illustrated in Fig. 6. Assume also that the connection management device 30 saves the usage information illustrated in Fig. 14, the valid profile location information illustrated in Fig. 15, and the group setting information illustrated in Fig. 9.

The thin client terminal 120 first acquires user name "User11" and password "pwuser11" from the input device 1004 as authentication information.

The thin client terminal 120 transmits the acquired authentication information to the connection management device 30 (step A11 in Fig. 10).

The user session management unit 32 of the connection management device 30 then acquires user name "User11" and password "pwuser11" from the thin client terminal 120 as authentication information.

The user session management unit 32 transmits the authentication information to the user information management device 320 and acquire user group name "UserGroup1" as relevant user information in Fig. 6 (step B11).

The virtual machine selection unit 31 selects a virtual machine 41 to be allocated to user "User11" by using the usage information, the valid profile location information, and the group setting information (step B12).

More specifically, the virtual machine selection unit 31 refers to the group setting information illustrated in Fig. 9 and specifies virtual machine group "VpcGroup1" relevant to user group "UserGroup1" (step B21 in Fig. 11).

The virtual machine selection unit 31 refers to the usage information illustrated in Fig. 14 and extracts "Vpc11" and "Vpc12" as available virtual machines 41 of virtual machines 41 belonging to virtual machine group "VpcGroup1" (step B22).

The virtual machine selection unit 31 refers to the valid profile location information illustrated in Fig. 15 and acquires "Vpc12" as a virtual machine 41 saving a valid user profile for user "User11." The virtual machine selection unit 31 determines that such virtual machine 41 "Vpc12" is present in available virtual machines 41 "Vpc11" and "Vpc12" (Yes in step B23).

The virtual machine selection unit 31 therefore selects "Vpc12" (step B24).

In this way, virtual machine 41 "Vpc12" is selected in step B12 of Fig. 10.

The user session management unit 32 requests selected virtual machine 41 "Vpc12" to delete an unnecessary user profile (step B13).

More specifically, the user session management unit 32 refers to the valid profile location information illustrated in Fig. 15 and acquires user "User11" having his or her valid user profile saved in selected virtual machine 41 "Vpc12" (step B31 in Fig. 12). Acquired user "User11" is identical to user "User11" who requests login.

The user session management unit 32 therefore sets user "User11" specified in step B31 and requesting login as a user to be excluded. The user session management unit 32 sends notification of the information of user "User11" to be excluded to selected virtual machine 41 "Vpc12" and requests it to delete an unnecessary user profile (step B32).

The user profile management unit 42 of virtual machine 41 "Vpc12" deletes an unnecessary user profile (step C11 in Fig. 10).

More specifically, the user profile management unit 42 acquires the information of "User11" as a user to be excluded (step C31 in Fig. 13).

The user profile management unit 42 acquires a list of users who have logged in to its own machine "Vpc12" (step C32).

Assume herein that no user has logged in.

The user profile management unit 42 determines whether any user profile saved in its own machine "Vpc12" remains to be processed. Assume herein that the user profile of "TestUser1" is found to remain to be processed (Yes in step C33).

The user profile management unit 42 then determines that the user profile of "TestUser1" is a mobile user profile (Yes in step C34).

The user profile management unit 42 then determines that "TestUser1" is not user "User11" to be excluded and has not logged in (No in step C35).

The user profile management unit 42 therefore deletes the user profile of "TestUser1" (step C36).

The process returns to step C33, in which the user profile management unit 42 determines whether any user profile saved in its own machine "Vpc12" remains to be processed. Assume herein that the user profile of "User11" is found to remain to be processed (Yes in step C33).

The user profile management unit 42 then determines that the user profile of "User11" is a mobile user profile (Yes in step C34).

The user profile management unit 42 then determines that "User11" is user "User11" to be excluded (Yes in step C35).

The user profile management unit 42 returns to step C33 without deleting this user profile.

The user profile management unit 42 then determines that no user profile saved in its own machine "Vpc12" remains to be processed (No in step C33).

In this way, in step C11 of Fig. 10, the unnecessary user profile of "TestUser1" is deleted in selected virtual machine 41 "Vpc12."

The user session management unit 32 of the connection management device 30 sends notification of selected virtual machine 41 "Vpc12" to the thin client terminal 120 (step B14).

The thin client terminal 120 transmits user name "User11" and password "pwuser11" to notified virtual machine 41 "Vpc12" as authentication information and requests it to establish a connection (step A12).

The user profile management unit 42 of virtual machine 41 "Vpc12" acquires authentication information from the thin client terminal 120. The user profile management unit 42 acquires "¥¥FileSrv¥Profiles¥User11" as a storage location of the user profile relevant to the authentication information of user "User11" in Fig. 6 from the user information management device 320 (step C12).

The user profile management unit 42 compares the time stamp of the user profile saved in its own machine with the time stamp of the user profile in the user profile storage device 210, for user "User11." The user profile management unit 42 determines that the time stamp in its own machine is identical to or newer than that in the user profile storage device 210 ("Virtual Machine" in step C13).

The user profile management unit 42 therefore reuses the user profile of "User11" in its own machine and allows "User11" to log in (step C14).

The user connection monitoring unit 23 of virtual machine 41 "Vpc12" detects a change in connection state, in which user "User11" has logged in to virtual machine 41 "Vpc12" (step C5 and Yes in step C6 of Fig. 4).

The user connection monitoring unit 23 sends notification that user "User11" has logged in to its own machine as a connection state to the connection management device 30 (step C7).

The user session management unit 32 of the connection management device 30 receives a notification of the connection state. The user session management unit 32 updates the usage information of the virtual machine 41 "Vpc12." More specifically, the user session management unit 32 updates "Usage" to "In Use" on the third row of Fig. 14 (step B3).

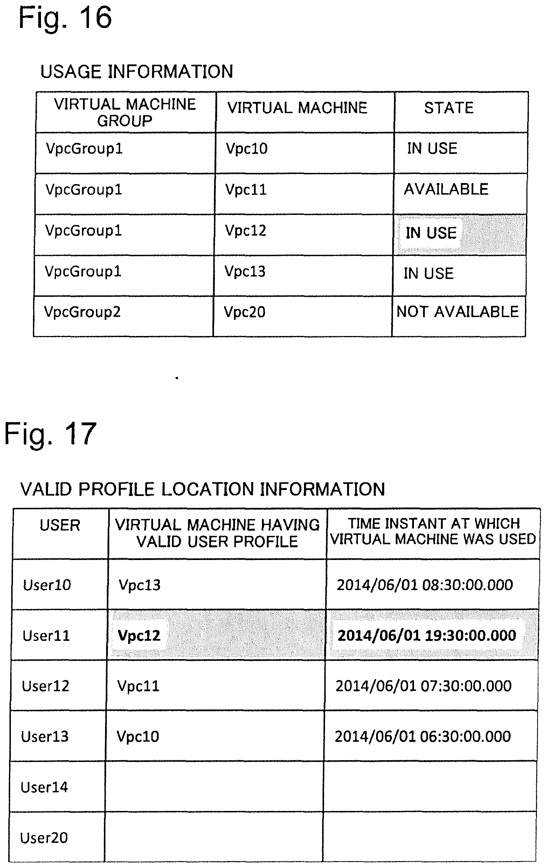

By this operation, the usage information is updated from the contents illustrated in Fig. 14 to those illustrated in Fig. 16.

The user session management unit 32 updates the valid profile location information of the user "User11." More specifically, the user session management unit 32 leaves "Virtual Machine Having Valid User Profile" intact as it has already been set to "Vpc12" on the second row of Fig. 15. The user session management unit 32 updates "Use Time Instant" to the current time instant "2014/06/01 19:30:00.000" on the second row of Fig. 15.

By this operation, the valid profile location information is updated from the contents illustrated in Fig. 15 to those illustrated in Fig. 17.

### <Specific Example 3>

The case where user "User10" logs out from virtual machine 41 "Vpc13" will be described next with reference to Fig. 4. Assume herein that the user information management device 320 stores the user information illustrated in Fig. 6. Assume also that the connection management device 30 saves the usage information illustrated in Fig. 16, the valid profile location information illustrated in Fig. 17, and the group setting information illustrated in Fig. 9.

The thin client terminal 120 first acquires information indicating logout of user "User10" and requests virtual machine 41 "Vpc13" to disconnect itself from virtual machine 41 "Vpc13" (step A3 in Fig. 10).

The user profile management unit 42 of virtual machine 41 "Vpc13" saves the user profile of user "User10" upon logout from its own machine. The user profile management unit 42 stores a copy of the user profile of user "User10" at the storage location of "¥¥FileSrv¥Profiles¥User10" on the user profile storage device 210 (step C4).

The user connection monitoring unit 23 of virtual machine 41 "Vpc13" detects a change in connection state, in which user "User10" has logged out from its own machine (step C5 and Yes in step C6 of Fig. 4).

The user connection monitoring unit 23 sends notification that user "User10" has logged out from virtual machine 41 "Vpc13" as a connection state to the connection management device 30 (step C7).

The user session management unit 32 of the connection management device 30 receives a notification of the connection state. The user session management unit 32 updates the usage information of the virtual machine 41 "Vpc13." More specifically, the user session management unit 32 updates "Usage" to "In Use" on the fourth row of Fig. 16 (step B3).

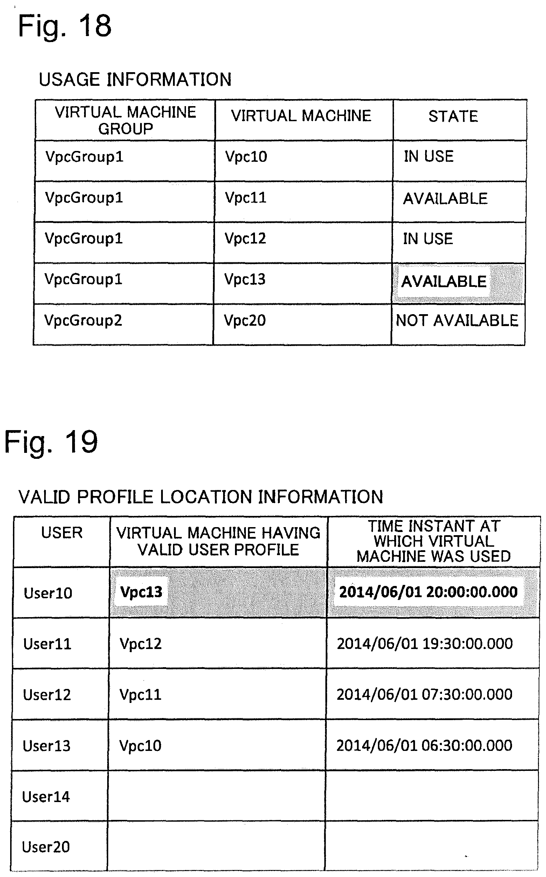

By this operation, the usage information is updated from the contents illustrated in Fig. 16 to those illustrated in Fig. 18.

The user session management unit 32 updates the valid profile location information of the user "User10." More specifically, the user session management unit 32 leaves "Virtual Machine Having Valid User Profile" intact as it has already been set to "Vpc13" on the first row of Fig. 17. The user session management unit 32 updates "Use Time Instant" to the current time instant "2014/06/01 20:00:00.000" on the first row of Fig. 17.

By this operation, the valid profile location information is updated from the contents illustrated in Fig. 17 to those illustrated in Fig. 19.

### <Specific Example 4>

The case where user "User14" establishes a connection with the virtual machine 41 will be described next with reference to Figs. 10 to 13 and 4. Assume herein that the user information management device 320 stores the user information illustrated in Fig. 6. Assume also that the connection management device 30 saves the usage information illustrated in Fig. 18, the valid profile location information illustrated in Fig. 19, and the group setting information illustrated in Fig. 9.

The thin client terminal 120 first acquires user name "User14" and password "pwuser14" from the input device 1004 as authentication information.

The thin client terminal 120 transmits the acquired authentication information to the connection management device 30 (step A11 in Fig. 10).

The user session management unit 32 of the connection management device 30 then acquires user name "User14" and password "pwuser14" from the thin client terminal 120 as authentication information.

The user session management unit 32 transmits the authentication information to the user information management device 320 and acquires user group name "UserGroup1" as relevant user information in Fig. 6 (step B11).

The virtual machine selection unit 31 selects a virtual machine 41 to be allocated to user "User14" by using the usage information, the valid profile location information, and the group setting information (step B12).

More specifically, the virtual machine selection unit 31 refers to the group setting information illustrated in Fig. 9 and specifies virtual machine group "VpcGroup1" relevant to user group "UserGroup1" (step B21 in Fig. 11).

The virtual machine selection unit 31 refers to the usage information illustrated in Fig. 18 and extracts "Vpc11" and "Vpc13" as available virtual machines 41 of virtual machines 41 belonging to virtual machine group "VpcGroup1" (step B22).

The virtual machine selection unit 31 refers to the valid profile location information illustrated in Fig. 19 and determines that a virtual machine 41 saving a valid user profile for user "User14" is absent. Thus, the virtual machine selection unit 31 determines that such a virtual machine 41 is absent in available virtual machines 41 "Vpc11" and "Vpc13" (No in step B23).

The virtual machine selection unit 31 therefore refers to the valid profile location information illustrated in Fig. 19 and determines whether a virtual machine 41 saving no valid user profile is present in available virtual machines 41 "Vpc11" and "Vpc13" (step B25).

Both "Vpc11" and "Vpc13" are specified on the column of "Virtual Machine Having Valid User Profile" in the valid profile location information illustrated in Fig. 19. The virtual machine selection unit 31 therefore determines that a virtual machine 41 saving no valid user profile is absent in available virtual machines 41 "Vpc11" and "Vpc13" (No in step B25).

The virtual machine selection unit 31 therefore selects one of available virtual machines 41 "Vpc11" and "Vpc13."

Assume herein that a "virtual machine which was used last time at the earliest time instant" is set as a selection condition when a plurality of virtual machines 41 are selectable. The virtual machine selection unit 31 refers to the valid profile location information illustrated in Fig. 19 and obtains "2014/06/01 07:30:00.000" as the last-used time instant of "Vpc11" and "2014/06/01 20:00:00.000" as the last-used time instant of "Vpc13." The virtual machine selection unit 31 therefore selects "Vpc11" which was used last time at the earliest time instant of virtual machines 41 "Vpc11" and "Vpc13" (step B27).

In this way, virtual machine 41 "Vpc11" is selected in step B12 of Fig. 10.

The user session management unit 32 requests selected virtual machine 41 "Vpc11" to delete an unnecessary user profile (step B13).

More specifically, the user session management unit 32 refers to the valid profile location information illustrated in Fig. 19 and acquires user "User12" having his or her valid user profile saved in selected virtual machine 41 "Vpc11" (step B31 in Fig. 12).

The user session management unit 32 therefore sets user "User12" specified in step B31 and user "User14" who requests login as users to be excluded. The user session management unit 32 sends notification of the information of users "User12" and "User14" to be excluded to selected virtual machine 41 "Vpc11" and requests it to delete an unnecessary user profile (step B32).

The user profile management unit 42 of virtual machine 41 "Vpc11" deletes an unnecessary user profile (step C11 in Fig. 10).

More specifically, the user profile management unit 42 acquires the information of "User12" and "User14" as users to be excluded (step C31 in Fig. 13).

The user profile management unit 42 acquires a list of users who have logged in to its own machine "Vpc11" (step C32).

Assume herein that no user has logged in.

The user profile management unit 42 determines whether any user profile saved in its own machine "Vpc11" remains to be processed. Assume herein that the user profile of "User12" is found to remain to be processed (Yes in step C33).

The user profile management unit 42 then determines that the user profile of "User12" is a mobile user profile (Yes in step C34).

The user profile management unit 42 then determines that "User12" is a user to be excluded (Yes in step C35).

The user profile management unit 42 returns to step C33 without deleting the user profile of "User12."

The user profile management unit 42 then determines that no user profile saved in its own machine "Vpc11" remains to be processed (No in step C33).

In this way, in step C11 of Fig. 10, deletion is not performed in selected virtual machine 41 "Vpc11" because of the absence of an unnecessary user profile.

The user session management unit 32 of the connection management device 30 sends notification of selected virtual machine 41 "Vpc11" to the thin client terminal 120 (step B14).

The thin client terminal 120 transmits user name "User14" and password "pwuser14" to notified virtual machine 41 "Vpc11" as authentication information and requests it to establish a connection (step A12).

The user profile management unit 42 of virtual machine 41 "Vpc11" acquires authentication information from the thin client terminal 120. The user profile management unit 42 acquires "¥¥FileSrv¥Profiles¥User14" as a storage location of the user profile relevant to the authentication information of user "User14" in Fig. 6 from the user information management device 320 (step C12).

Since the user profile of user "User14" is absent in its own machine "Vpc11," the user profile management unit 42 determines that the user profile in the user profile storage device 210 is newer ("User Profile Storage Device" in step C13).

The user profile management unit 42 therefore acquires a copy of a user profile from "¥¥FileSrv¥Profiles¥User14" on the user profile storage device 210 and allows "User14" to log in (step C15).

The user connection monitoring unit 23 of virtual machine 41 "Vpc11" detects a change in connection state, in which user "User14" has logged in to its own machine "Vpc11" (step C5 and Yes in step C6 of Fig. 4).

The user connection monitoring unit 23 sends notification that user "User14" has logged in to virtual machine "Vpc11" as a connection state to the connection management device 30 (step C7).

The user session management unit 32 of the connection management device 30 receives a notification of the connection state. The user session management unit 32 updates the usage information of the virtual machine 41 "Vpc11." More specifically, the user session management unit 32 updates "Usage" to "In Use" on the second row of Fig. 18 (step B3).

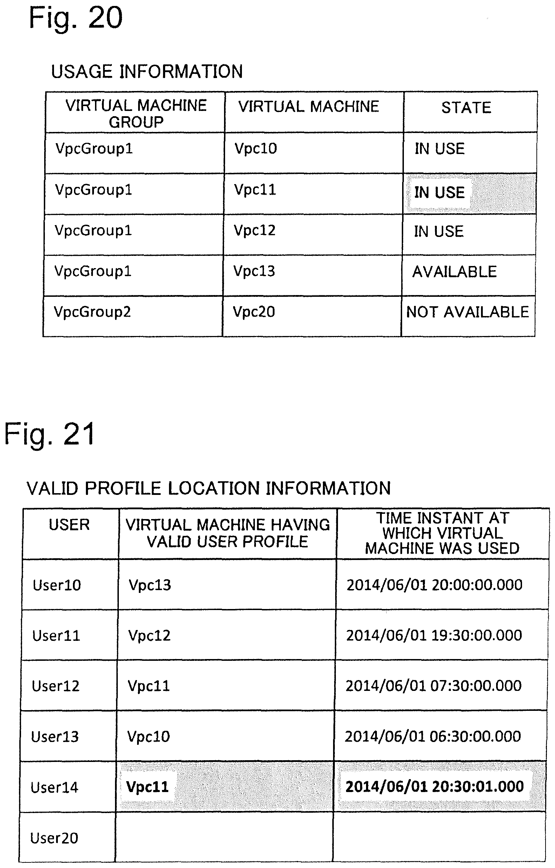

By this operation, the usage information is updated from the contents illustrated in Fig. 18 to those illustrated in Fig. 20.

The user session management unit 32 updates the valid profile location information of the user "User14." More specifically, the user session management unit 32 updates "Virtual Machine Having Valid User Profile" to "Vpc11" on the fifth row of Fig. 19. The user session management unit 32 updates "Use Time Instant" to the current time instant "2014/06/01 20:30:01.000" on the fifth row of Fig. 19.

By this operation, the valid profile location information is updated from the contents illustrated in Fig. 19 to those illustrated in Fig. 21.

Specific operation examples of the thin client system 2 have been given above.

The effect of the second example embodiment of the present invention will be described below.

In the second example embodiment of the present invention, login storms can be more effectively suppressed in a thin client system using a virtual machine.

The reason will be given hereinafter. In this example embodiment, in addition to the same configuration as in the first example embodiment of the present invention, when a virtual machine saving a valid user profile for a user who requests login is absent in available virtual machines, the virtual machine selection unit of the connection management device is configured as follows: the virtual machine selection unit selects one of virtual machines saving no valid user profiles for any users in the available virtual machines.

In this manner, in this example embodiment, one user is less likely to log in to a virtual machine saving a valid user profile for another user. Thus, in this example embodiment, a virtual machine saving a valid user profile for a user who requests login is less likely to be in use by another user. This makes valid user profiles more likely to be reused. As a result, in this example embodiment, login storms can be more effectively suppressed.

In the second example embodiment of the present invention, even when the user profiles of users do not be reused, increase of the load to the system by acquiring the copy from the user profile storage device can be suppressed.

This is because when a plurality of virtual machines are selectable, the virtual machine selection unit of the connection management device selects one of the virtual machines, on the basis of a condition based on the last-used time instant, a condition based on the load on the virtual machine operating device or the storage, or a combination of these selection conditions.

In the second example embodiment of the present invention, increase of required storage capacity can be suppressed for user profiles saved in each virtual machine to suppress login storms.

The reason will be given hereinafter. In this example embodiment, the user session management unit requests a virtual machine selected as the login destination of the user to delete an unnecessary user profile. In this case, the user session management unit refers to the valid profile location information and thereby specifies a valid user profile saved in a virtual machine to which a request for deletion is to be issued. The user session management unit requests the virtual machine selected as the login destination to delete an unnecessary user profile while notifying that the specified user profile is to be excluded from deletion targets. The user profile management unit of the virtual machine deletes an unnecessary user profile other than the user profiles of users who have logged in or issuing login requests to its own machine and the notified user profiles to be excluded.

In this way, in this example embodiment, a user profile that is not latest (invalid) is deleted from the user profiles remaining in the virtual machine. In this example embodiment, therefore, an increase in utilization of the storage device with an increase in number of user profiles to be saved can be prevented.

### (Third Example Embodiment)

A third example embodiment of the present invention will be described in detail below with reference to drawings. In the drawings referred to in describing this example embodiment, the same reference numerals denote the same components and steps for the same operations as in the second example embodiment of the present invention, and a detailed description thereof will not be given in this example embodiment.

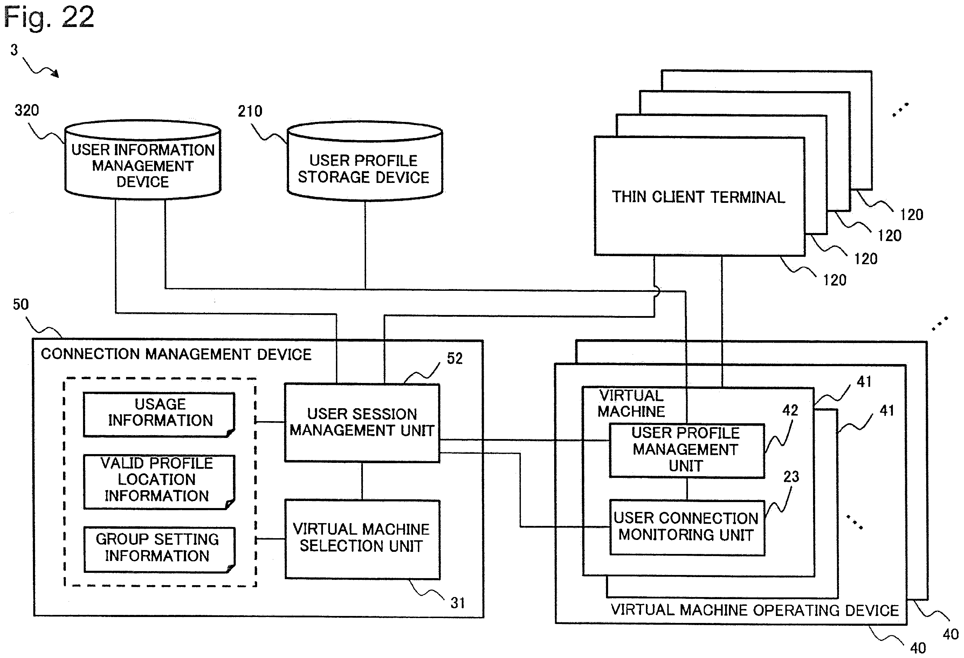

First, Fig. 22 illustrates a configuration of a thin client system 3 according to the third example embodiment of the present invention. Referring to Fig. 22, compared to the thin client system 2 according to the second example embodiment of the present invention, the thin client system 3 includes a connection management device 50 in place of the connection management device 30.

The connection management device 50 can be achieved by a computer including the same hardware components as in the first example embodiment of the present invention described with reference to Fig. 2. However, the hardware configuration of the thin client system 3 is not limited to the above-mentioned one.

Compared to the connection management device 30 according to the second example embodiment of the present invention, the connection management device 50 includes a user session management unit 52 in place of the user session management unit 32.

The user session management unit 52 is configured similarly to the user session management unit 32 according to the second example embodiment of the present invention. The timing at which a request is issued to delete an unnecessary user profile differs. In the second example embodiment of the present invention, the user session management unit 32 issues a request to delete an unnecessary user profile the moment the user requests login. In this example embodiment, the user session management unit 52 issues a request to delete an unnecessary user profile when the user logs out.

A user profile management unit 42 of a virtual machine 41 thus performs a process for deleting an unnecessary user profile when the user logs out. However, since the user profile management unit 42 may perform a deletion process in response to a request for deletion from the connection management device 50, the user profile management unit 42 may employ the same configuration as in the second example embodiment of the present invention.

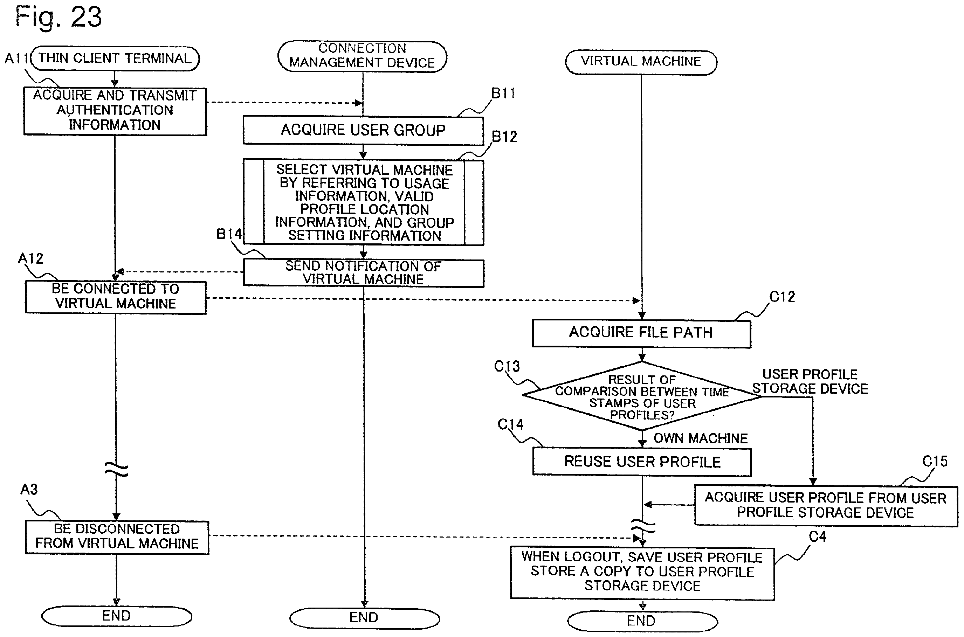

Fig. 23 illustrates an operation for controlling connection from a thin client terminal 120 to the virtual machine 41 by the thin client system 3 configured as above.

Referring to Fig. 23, the thin client system 3 performs an operation for controlling connection in a nearly similar manner in the second example embodiment of the present invention. The connection management device 50 performs a virtual machine notification operation in step B14 without issuing a request to delete an unnecessary user profile in step B13 after selecting a virtual machine 41 in step B12. The virtual machine 41 performs no process for deleting an unnecessary user profile in step C11, when the user logs in.

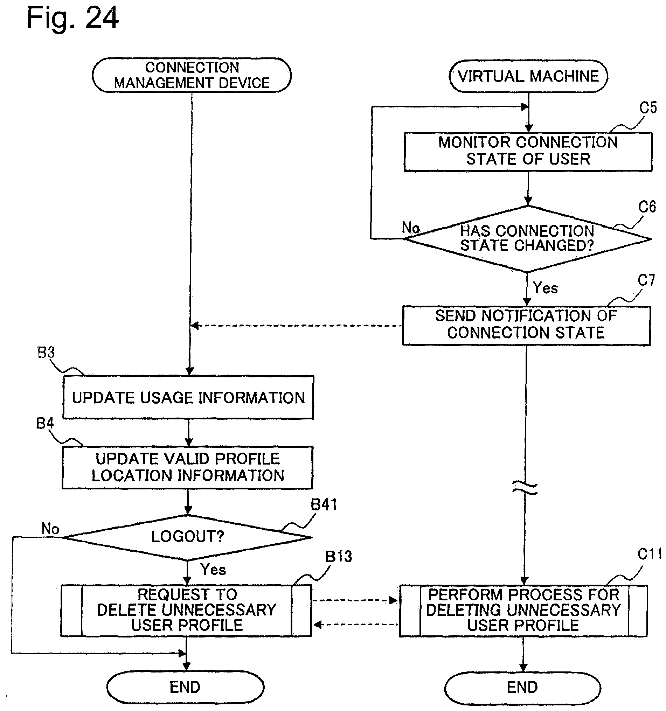

Fig. 24 illustrates an operation for updating usage information and valid profile location information and an operation for deleting an unnecessary user profile by the thin client system 3.

Referring to Fig. 24, the virtual machine 41 operates in a similar manner as the virtual machine 41 according to the second example embodiment of the present invention described with reference to Fig. 4 in steps C5 to C7. Thus, the connection management device 50 is notified of the connection state of the user.

In the connection management device 50 having received a notification of the connection state, the user session management unit 52 operates similarly to the connection management device 30 according to the second example embodiment of the present invention in steps B3 and B4. Thus, the usage information and the valid profile location information are updated in response to a change in connection state of the user.

The user session management unit 52 determines whether the connection state of the user notified by the virtual machine 41 is logout (step B41).

If the connection state is logout, the user session management unit 52 executes step B13 (steps B31 and B32 in Fig. 12) in a nearly similar manner in the second example embodiment of the present invention.

However, in this example embodiment, the user session management unit 52 applies a logout notification source virtual machine as the virtual machine 41 which is the delete request target. The user session management unit 52 specifies a user having his or her valid user profile saved in the logout notification source virtual machine 41 (step B31) by referring to the valid profile location information.

The user session management unit 52 then sets the user specified in step B31 as a user to be excluded. In step B32 of the second example embodiment of the present invention, the user session management unit 52 adds a "user who requests login" to the user specified in step B31 as a user to be excluded. In this example embodiment, since the operation is done in logout, a "user who requests login" is absent. Therefore, the user session management unit 52 requests the logout notification source virtual machine 41 to delete an unnecessary user profile while sending notification of the user specified in step B31 as a user to be excluded to the logout notification source virtual machine 41 (step B32).

The user profile management unit 42 of the virtual machine 41 executes step C11 (steps C31 to C36 in Fig. 13) in a similar manner in the second example embodiment of the present invention.

This deletes an unnecessary user profile at the login destination.

After the above-mentioned processes, the thin client system 3 ends its operation for deleting an unnecessary user profile.

A Specific Example of the operation of the thin client system 3 will be given below.

### <Specific Example 5>

The case where user "User10" logs out from virtual machine 41 "Vpc13" will be described in this Example. Assume herein that a user information management device 320 stores the user information illustrated in Fig. 6. Assume also that the connection management device 50 saves the usage information illustrated in Fig. 16, the valid profile location information illustrated in Fig. 17, and the group setting information illustrated in Fig. 9.

The thin client system 3 first operates in steps A3 and C4 of Fig. 23 and steps C5 to C7, B3, and B4 in Fig. 24, as in Specific Example 3 according to the second example embodiment of the present invention. Thus, user "User10" logs out from virtual machine 41 "Vpc13." The usage information is updated from the contents illustrated in Fig. 16 to those illustrated in Fig. 18. The valid profile location information is updated from the contents illustrated in Fig. 17 to those illustrated in Fig. 19.

The user session management unit 52 of the connection management device 50 determines that the connection state of the user notified by virtual machine 41 "Vpc13" is logout (Yes in step B41 of Fig. 24).

The user session management unit 52 requests logout notification source virtual machine 41 "Vpc13" to delete an unnecessary user profile (step B13 in Fig. 24).

More specifically, the user session management unit 52 first applies logout notification source virtual machine 41 "Vpc13" to the virtual machine 41 which is the delete request target. The user session management unit 52 refers to the valid profile location information illustrated in Fig. 19 and thereby specifies user "User10" having his or her valid user profile saved in virtual machine 41 "Vpc13" (step B31 in Fig. 12).

The user session management unit 52 requests virtual machine 41 "Vpc13" to delete an unnecessary user profile while sending notification of "User10" as a user to be excluded (step B32).

The user profile management unit 42 of virtual machine 41 "Vpc13" deletes an unnecessary user profile (step C11 in Fig. 24).

More specifically, the user profile management unit 42 acquires the information of "User10" as a user to be excluded (step C31 in Fig. 13).

The user profile management unit 42 acquires a list of users who have logged in to its own machine "Vpc13" (step C32).

Assume herein that no user has logged in.

The user profile management unit 42 determines whether any user profile saved in its own machine "Vpc13" remains to be processed. Assume herein that the user profile of "TestUser1" is found to remain to be processed (Yes in step C33).

The user profile management unit 42 then determines that the user profile of "TestUser1" is a mobile user profile (Yes in step C34).

The user profile management unit 42 then determines that "TestUser1" is not user "User10" to be excluded and has not logged in (No in step C35).

The user profile management unit 42 therefore deletes the user profile of "TestUser1" (step C36).

The process returns to step C33, in which the user profile management unit 42 determines whether any user profile saved in its own machine "Vpc13" remains to be processed. Assume herein that the user profile of "User10" is found to remain to be processed (Yes in step C33).

The user profile management unit 42 then determines that the user profile of "User10" is a mobile user profile (Yes in step C34).

The user profile management unit 42 then determines that "User10" is user "User10" to be excluded (Yes in step C35).

The user profile management unit 42 returns to step C33 without deleting this user profile.

The user profile management unit 42 then determines that no user profile saved in its own machine "Vpc13" remains to be processed (No in step C33).

In this way, in step C11 of Fig. 24, the unnecessary user profile of "TestUser1" is deleted immediately after logout of user "User10" in virtual machine 41 "Vpc13."

A specific operation example of the thin client system 3 has been given above.

The effect of the third example embodiment of the present invention will be described below.

In the third example embodiment of the present invention, an increase in load to the virtual machine in login due to factors associated with a process for deleting an unnecessary user profile can be prevented.

The reason will be given hereinafter. In this example embodiment, the user session management unit of the connection management device requests a virtual machine to which the user has previously logged in to delete an unnecessary user profile, when the user logs out.

For this reason, in this example embodiment, the virtual machine performs no process for deleting an unnecessary user profile when the user logs in. In this example embodiment, therefore, an increase in load to the virtual machine in login can be prevented.

### (Fourth Example Embodiment)

A fourth example embodiment of the present invention will be described in detail below with reference to drawings. In the drawings referred to in describing this example embodiment, the same reference numerals denote the same configurations and steps for the same operations as in the third example embodiment of the present invention, and a detailed description thereof will not be given in this example embodiment.

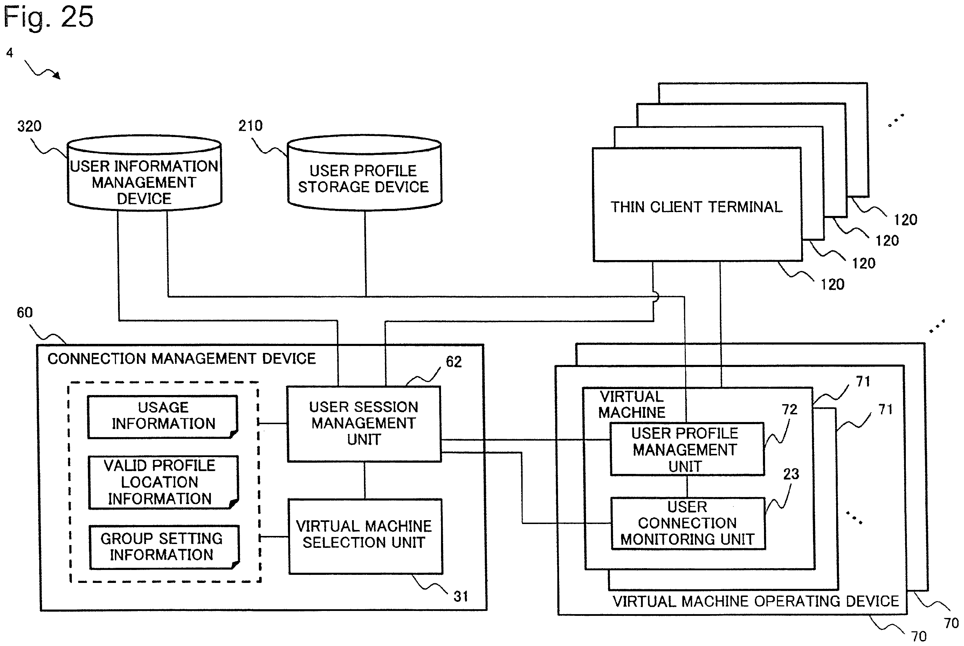

First, Fig. 25 illustrates a configuration of a thin client system 4 according to the fourth example embodiment of the present invention. Referring to Fig. 25, compared to the thin client system 3 according to the third example embodiment of the present invention, the thin client system 4 includes a connection management device 60 in place of the connection management device 50 and a virtual machine operating device 70 in place of the virtual machine operating device 40. At least one virtual machine 71 runs on the virtual machine operating device 70. The devices are communicably connected to each other via a network.

The connection management device 60 and the virtual machine operating device 70 can be achieved by computers including the same hardware components as in the first example embodiment of the present invention described with reference to Fig. 2. However, the hardware configuration of the thin client system 4 is not limited to the above-mentioned one.

Compared to the connection management device 50 according to the third example embodiment of the present invention, the connection management device 60 includes a user session management unit 62 in place of the user session management unit 52.

The user session management unit 62 is configured almost similarly to the user session management unit 52 according to the third example embodiment of the present invention. The timing at which a request is issued to delete an unnecessary user profile and the details of a process for requesting deletion differ.

In the third example embodiment of the present invention, the user session management unit 52 issues a request to delete an unnecessary user profile, when the user logs out. In this example embodiment, the user session management unit 62 issues a request to delete an unnecessary user profile, at an arbitrary timing. The user session management unit 62 issues a delete request to each virtual machine 71 available at the point in time at which the user session management unit 62 requests to delete. The virtual machines 71 available at this point in time can be specified by referring to the usage information.

The user session management unit 62 may issue a request for deletion at, for example, the timing according to a predetermined schedule. More specifically, for example, the schedule may be set to issue request for deletion in the time zone in which the load on the thin client system 4 is known to be relatively low. The user session management unit 62 may issue a request for deletion for each predetermined interval. The user session management unit 62 may issue a request for deletion at the timing at which the state of the thin client system 4 is detected to satisfy a predetermined condition. The predetermined condition may be, for example, the condition in which the thin client system 4 has a predetermined low load.

In issuing a request to delete an unnecessary user profile, the user session management unit 62 specifies users to be excluded from deletion targets as follows. First, the user session management unit 62 specifies users having their valid user profiles saved in the virtual machine 71 which is the delete request target, by referring to the valid profile location information. The user session management unit 62 then extracts a user satisfying the condition based on the last-used time instant. The user session management unit 62 may extract, for example, a user whose elapsed time from the last-used time instant is equal to or shorter than a predetermined time. The user session management unit 62 sets the thus extracted user as a user to be excluded from deletion targets. The user session management unit 62 requests the virtual machine 71 which is the delete request target to perform a process for deleting an unnecessary user profile while notifying it of the user to be excluded.

The user session management unit 62 receives, from the virtual machine 71 to which has been requested to delete an unnecessary user profile, information indicating the user having his or her user profile deleted. The user session management unit 62 updates the valid profile location information of each user indicated by the received information. More specifically, when the virtual machine 71 saving a valid user profile for related user is the virtual machine 71 that has deleted the user profile, the user session management unit 62 erases the valid profile location information of this user. This process for erasing the valid profile location information is performed because even a valid user profile for one user may be deleted from the virtual machine 71 to which a request for deletion has been issued, when its use time instant does not satisfy the condition based on the last-used time instant.

Compared to the virtual machine 41 according to the third example embodiment of the present invention, the virtual machine 71 includes a user profile management unit 72 in place of the user profile management unit 42.

The user profile management unit 72 performs a process for deleting an unnecessary user profile in a nearly similar manner in the third example embodiment of the present invention, in response to a request from the connection management device 60. In addition, the user profile management unit 72 notifies the connection management device 60 of information indicating the user having his or her user profile deleted.

The operation of the thin client system 4 configured as above will be described below with reference to drawings. Since an operation for controlling connection by the thin client system 4 is the same as that according to the third example embodiment of the present invention described with reference to Fig. 23, a description thereof will not be given in this example embodiment.

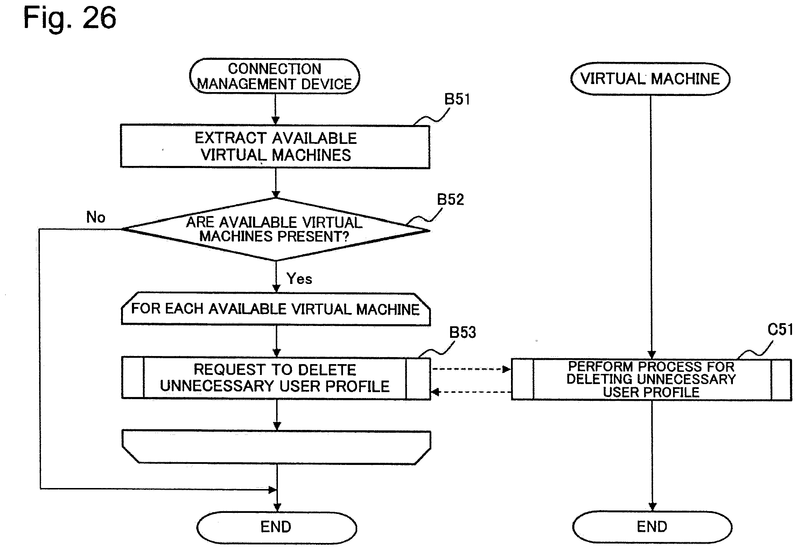

Fig. 26 illustrates an overview of an operation for deleting an unnecessary user profile by the thin client system 4. The operation illustrated in Fig. 26 is performed at an arbitrary timing as described above.

Referring to Fig. 26, the user session management unit 62 of the connection management device 60 first extracts available virtual machines 71 (step B51) by referring to the usage information.

If no available virtual machines 71 are extracted (No in step B52), the user session management unit 62 ends its operation.

If available virtual machines 71 are extracted (Yes in step B52), the user session management unit 62 requests each extracted virtual machine 71 to delete an unnecessary user profile (step B53). This step will be described in detail later.

In each virtual machine 71 requested to delete an unnecessary user profile, the user profile management unit 72 deletes an unnecessary user profile (step C51). This step will be described in detail later.

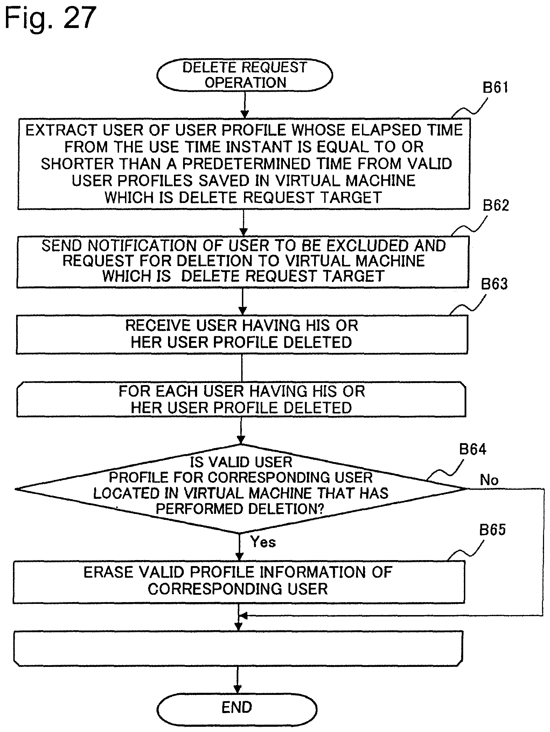

Fig. 27 illustrates details of an operation for issuing a request to delete an unnecessary user profile by the connection management device 60 in step B53.

Referring to Fig. 27, the user session management unit 62 of the connection management device 60 extracts a user of user profile whose elapsed time from use time instant is equal to or shorter than a predetermined time from the valid user profiles saved in target virtual machine 71 (step B61).

The user session management unit 62 requests the target virtual machine 71 to delete an unnecessary user profile while sending notification of the extracted user as a user to be excluded (step B62).

The user session management unit 62 receives from the virtual machine 71 having requested deletion, information indicating the user having his or her user profile deleted (step B63).

The user session management unit 62 performs the processes in steps B64 and B65 for each user indicated by the received information.

More specifically, the user session management unit 62 refers to the user profile location information of related user. The user session management unit 62 determines whether the virtual machine 71 saving a valid user profile for the user is the virtual machine 71 that has performed the deletion process (step B64).

If the virtual machine 71 saving a valid user profile for the related user is the virtual machine 71 that has performed the deletion process, the user session management unit 62 erases the valid profile location information of this user (step B65).

If the virtual machine 71 saving a valid user profile for the related user is not the virtual machine 71 that has performed the deletion process, the user session management unit 62 leaves the valid profile location information of this user intact.

Upon completing the processes in steps B64 and B65 for all users indicated by the information received in step B63, the user session management unit 62 ends its operation for issuing a request to delete an unnecessary user profile.

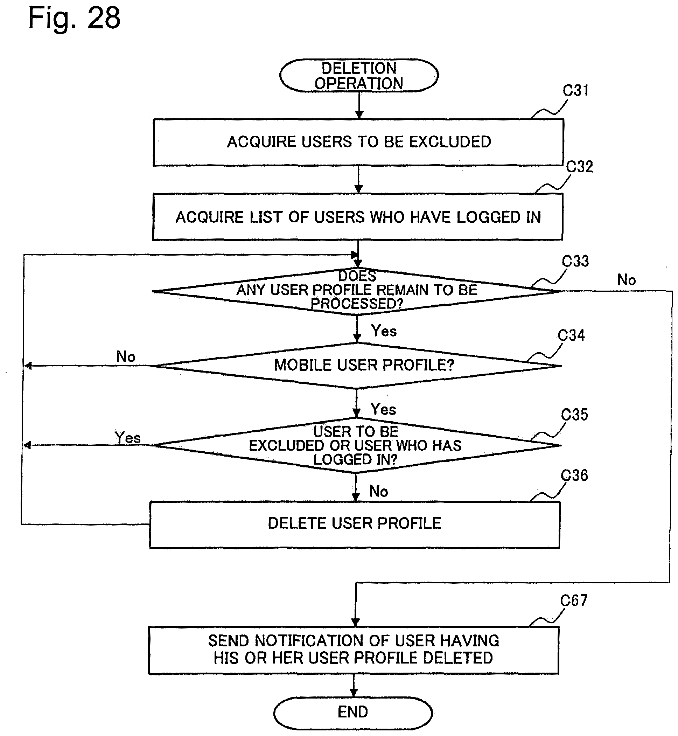

Fig. 28 illustrates details of an operation for deleting an unnecessary user profile by the virtual machine 71 in step C51.

Referring to Fig. 28, the user profile management unit 72 of the virtual machine 71 operates in a similar manner in the third example embodiment of the present invention in steps C31 to C36 to delete an unnecessary user profile. The user notified as a user to be excluded in step C31 is a user of the user profile whose elapsed time from the last-used time instant satisfies a predetermined condition, of the valid user profiles saved in the virtual machine 71.

The user profile management unit 72 sends notification of information indicating the user having his or her user profile deleted in step C36 to the connection management device 60 (step C67).

The user notified in this case may include a user of the user profile whose elapsed time from the last-used time instant does not satisfy a predetermined condition, although his or her valid user profile has been saved in the virtual machine 71.

After the above-mentioned processes, the virtual machine 71 ends its operation for deleting an unnecessary user profile.

A Specific Example of the operation of the thin client system 4 will be given below.

### <Specific Example 6>

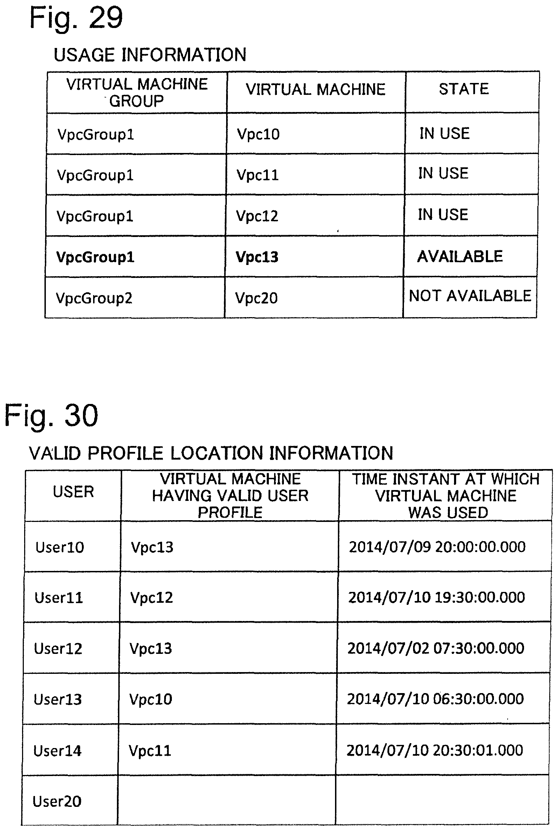

Assume herein that a user information management device 320 stores the user information illustrated in Fig. 6. Assume also that the connection management device 60 saves usage information illustrated in Fig. 29, valid profile location information illustrated in Fig. 30, and the group setting information illustrated in Fig. 9. Further assume that defined elapsed time from the last-used time instant as the extraction condition of a user to be excluded is set seven days or less. Further assume that the current time instant is "2014/07/10 20:35:00.000."

The user session management unit 62 of the connection management device 60 first refers to the usage information illustrated in Fig. 29 and acquires "Vpc13" as an available virtual machine 71 (step B51 and Yes in step B52).

The user session management unit 62 requests virtual machine 71 "Vpc13" to delete an unnecessary user profile (step B53).

More specifically, the user session management unit 62 refers to the valid profile location information illustrated in Fig. 30 and acquires "User10" and "User12" as users having their valid user profiles saved in available virtual machine 71 "Vpc13."

The user session management unit 62 extracts, from "User10" and "User12," a user whose elapsed time from the last-used time instant is equal to or shorter than seven days. In this case, the elapsed time from last-used time instant "2014/07/09 20:00:00.000" of "User10" until current time instant "2014/07/10 20:35:00.000" is shorter than seven days. The elapsed time from last-used time instant "2014/07/02 07:30:00.000" of "User12" until current time instant "2014/07/10 20:35:00.000" is longer than seven days. Therefore, the user session management unit 62 extracts "User10" as a user to be excluded, which satisfies the condition (step B61).

The user session management unit 62 requests virtual machine 71 "Vpc13" to delete an unnecessary user profile while sending notification of "User10" as a user to be excluded (step B62).

The user profile management unit 72 of virtual machine 71 "Vpc13" acquires the information of "User10" as a user to be excluded (step C31).

The user profile management unit 72 then acquires a list of users who have logged in to its own machine (step C32).

Assume herein that no user has logged in.

The user profile management unit 72 determines whether any user profile saved in its own machine "Vpc13" remains to be processed. Assume herein that the user profile of "User10" is found to remain to be processed (Yes in step C33).

The user profile management unit 72 then determines that the user profile of "User10" is a mobile user profile (Yes in step C34).

The user profile management unit 72 then determines that "User10" is user "User10" to be excluded (Yes in step C35).

The user profile management unit 72 returns to step C33 without deleting the user profile of "User10."

The user profile management unit 72 determines whether any user profile saved in its own machine "Vpc13" remains to be processed. Assume herein that the user profile of "User12" is found to remain to be processed (Yes in step C33).

The user profile management unit 72 then determines that the user profile of "User12" is a mobile user profile (Yes in step C34).

The user profile management unit 72 then determines that "User12" is not user "User10" to be excluded and has not logged in (No in step C35).

The user profile management unit 72 therefore deletes the user profile of "User12" (step C36).

The process returns to step C33, in which the user profile management unit 72 determines whether any user profile saved in its own machine "Vpc13" remains to be processed. Assume herein that it is determined that no user profile remains to be processed (No in step C33).

The user profile management unit 72 send notification of "User12" as a user having his or her user profile deleted to the connection management device 60 (step C67).

The user session management unit 62 acquires from the virtual machine 71, the information of "User12" as a user having his or her user profile deleted (step B63).

In the valid profile location information illustrated in Fig. 30, the virtual machine 71 saving a valid user profile for user "User12" which relates to notified deletion is "Vpc13." The virtual machine 71 which is the source of notification of the deleted user in step B63 is "Vpc13." Therefore, the user session management unit 62 determines that the virtual machine 71 saving a valid user profile for user "User12" which relates to notified deletion is the deleted-user notification source, virtual machine 71 (Yes in step B64).

The user session management unit 62 therefore erases the valid profile location information of "User12" which relates to notified deletion (step B65).

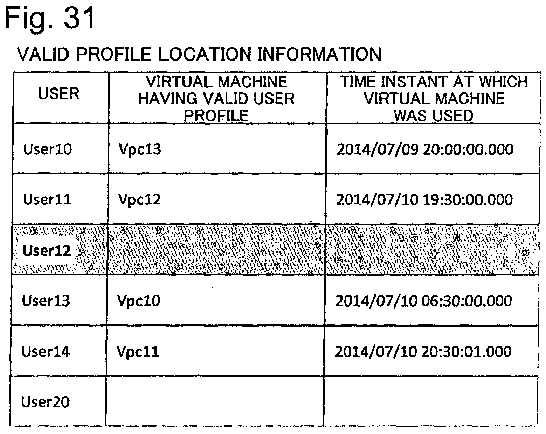

By this operation, the valid profile location information is updated from the contents illustrated in Fig. 30 to those illustrated in Fig. 31.

A specific operation example of the thin client system 4 has been given above.

The effect of the fourth example embodiment of the present invention will be described below.

In the fourth example embodiment of the present invention, increase of required storage capacity can further be suppressed for user profiles saved in each virtual machine to suppress login storms.

The reason will be given hereinafter. In this example embodiment, the user session management unit of the connection management device notifies a virtual machine selected as the login destination of the following user as a user to be excluded, in requesting it to delete an unnecessary user profile: a user whose last-used time instant satisfies a predetermined condition of users having their valid user profiles saved in the virtual machine to which a request for deletion is to be issued. The condition in which elapsed time from the last-used time instant falls within a predetermined period, for example, is employed as the predetermined condition.

In this manner, the user profile management unit of the virtual machine deletes a user profile which has not been used for a predetermined period, even for a user having his or her valid user profile saved in its own machine. Thus, in this example embodiment, since an old user profile which is valid for any user but is less likely to be reused is deleted, the storage capacity required in saving user profiles can be reduced.

In the fourth example embodiment of the present invention, the influence of an increase in load to the virtual machine due to factors associated with a process for deleting an unnecessary user profile can be alleviated.

The reason will be given hereinafter. In this example embodiment, at an arbitrary timing, the user session management unit of the connection management device requests a virtual machine that is available (not in use) at this point in time to delete an unnecessary user profile.

By this operation, in this example embodiment, the virtual machine can perform a process for deleting an unnecessary user profile in the time zone in which an increase in load to the virtual machine has less influence, such as the time zone in which only a few users use the thin client system.

In each of the above-described example embodiments of the present invention, several Specific Examples of the usage information and the valid profile location information have been given in table form, but they do not limit the data structures of the usage information and the valid profile location information or the type of information included, according to the present invention. The usage information may include at least information indicating whether each virtual machine is in use. The valid profile location information may include information indicating a virtual machine having his or her valid user profile saved for each user.

In each of the above-described example embodiments of the present invention, each user may concurrently log in to a plurality of virtual machines. In each example embodiment, the user session management unit of the connection management device records a virtual machine saving a valid user profile for a logged-out user even in logout. Thus, in this example embodiment, even when one user has concurrently logged in to a plurality of virtual machines during a certain period, the user profile used (last updated) by the virtual machine from which he or she has logged out last can be more likely to be reused in the next login.

In the above-described second to fourth example embodiments of the present invention, although an example in which the user profile storage device and the user information management device are different devices has been given, these devices may be implemented on the same computer. The user profile storage device may be achieved by a plurality of computers. The user information management device may also be achieved by a plurality of computers.

In the above-described second and third example embodiments of the present invention, the user session management unit of the connection management device may be configured to perform the operation for issuing a request to delete an unnecessary user profile, described in the fourth example embodiment of the present invention. In this case, in the second and third example embodiments of the present invention, the user profile management unit of the virtual machine may be configured to perform the operation for deleting an unnecessary user profile, described in the fourth example embodiment of the present invention.

In each of the above-described example embodiments of the present invention, an example in which each functional block of each device achieving a thin client system is implemented as a CPU which executes a computer program stored in a memory has been given mainly. The present invention is not limited to this, and some or all of the functional blocks or a combination thereof may be implemented as dedicated hardware.

In each of the above-described example embodiments of the present invention, the functional blocks of each device achieving a thin client system may be distributed and implemented as a plurality of devices.

In each of the above-described example embodiments of the present invention, the operation of each device achieving the thin client system described with reference to each flowchart is stored in a storage device (storage medium) of a computer as a computer program according to the present invention. The computer program may be read and executed by the CPU. In such a case, the present invention is implemented as the storage medium or the code of the computer program.

Each of the above-described example embodiments can be carried out in combination as appropriate.

The present invention has been described above by taking the above-described example embodiments as exemplary examples. However, the present invention is not limited to the above-described example embodiments. In other words, various modes which would be understood by those skilled in the art are applicable to the present invention within the scope of the present invention.

This application claims priority based on Japanese Patent Application No. 2015-043226 filed on March 5, 2015, the disclosure of which is incorporated herein in its entirety.

### Reference signs List

1, 2, 3, 4 Thin client system
10, 30, 50, 60 Connection management device
11, 31 Virtual machine selection unit
12, 32, 52, 62 User session management unit
20, 40, 70 Virtual machine operating device
21, 41, 71 Virtual machine
22, 42, 72 User profile management unit
23 User connection monitoring unit
110, 120 Thin client terminal
210 User profile storage device
320 User information management device
1001, 2001, 3001, 4001 CPU
1002, 2002, 3002, 4002 Memory
1003 Output device
1004 Input device
1005, 2005, 3005, 4005 Network interface

## Claims

1. A thin client system comprising: a thin client terminal; a connection management device; a virtual machine operating device on which at least one virtual machine runs; and a user profile storage device,
wherein the thin client terminal transmits information indicating a user who issues a login request to the thin client system to the connection management device upon acquiring the information, connects an own device to a virtual machine indicated by information sent from the connection management device, and allows the user to log in, and
the user profile storage device stores a user profile for each user of the thin client system,
wherein the connection management device includes:
virtual machine selection means for selecting the virtual machine to be allocated to the user who issues the login request to the thin client system by referring to usage information indicating whether each of the at least one virtual machine is in use, and valid profile location information indicating the virtual machine saving a valid user profile for the each user; and
user session management means for, upon acquiring, from the thin client terminal, information indicating the user who issues the login request to the thin client system, notifying the thin client terminal of information indicating the virtual machine selected by the virtual machine selection means, and updating the usage information and the valid profile location information according to a state of connection of the user with the virtual machine, and
wherein the virtual machine includes:
user profile management means for acquiring the valid user profile for the user who has logged in to an own machine from the own machine or the user profile storage device, and, when the user logs out, saving the user profile of the user used on the own machine and storing the user profile in the user profile storage device; and
user connection monitoring means for monitoring the state of connection of the user with the own machine and notifying the connection management device of the state of connection of the user with the virtual machine.

2. The thin client system according to claim 1, wherein
in the connection management device, the user session management means specifies, by referring to the valid profile location information, a user having the valid user profile saved in a virtual machine which is a delete request target of an unnecessary user profile, and requests the virtual machine which is the delete request target to delete the unnecessary user profile while notifying the virtual machine which is the delete request target of the specified user as a user to be excluded from a target for user profile deletion, and
in the virtual machine which is the delete request target, the user profile management means deletes the unnecessary user profile other than the user profiles of a user who has logged in to the own machine, a user issuing a login request to the virtual machine, and the user to be excluded.

3. The thin client system according to claim 2, wherein in the connection management device, the user session management means requests the virtual machine selected by the virtual machine selection means, regarding the virtual machine as the delete request target, to delete the unnecessary user profile while notifying the virtual machine of the user to be excluded, at a timing based on the login request issued by the user.

4. The thin client system according to claim 2 or 3, wherein in the connection management device, the user session management means requests the virtual machine to which the user has logged in, regarding the virtual machine as the delete request target, to delete the unnecessary user profile while notifying the virtual machine of the user to be excluded, at a timing based on logout by the user.

5. The thin client system according to any one of claims 2 to 4, wherein in the connection management device, at a timing arbitrarily determined, the user session management means requests the virtual machine available at the timing, regarding the virtual machine as the delete request target, to delete the unnecessary user profile while notifying the virtual machine of the user to be excluded.

6. The thin client system according to any one of claims 1 to 5, wherein in the connection management device, the virtual machine selection means extracts an available virtual machine by referring to the usage information, and selects a virtual machine saving the valid user profile for the user who issues the login request from the extracted available virtual machine, by referring to the valid profile location information.

7. The thin client system according to claim 6, wherein in the connection management device, the virtual machine selection means selects one of the extracted available virtual machine when a virtual machine saving the valid user profile for the user who issues the login request is absent in the extracted available virtual machine.

8. The thin client system according to claim 7, wherein in the connection management device, the virtual machine selection means selects one of a virtual machine saving no valid user profile for any user from the extracted available virtual machine when a virtual machine saving the valid user profile for the user who issues the login request is absent in the extracted available virtual machine.

9. The thin client system according to claim 8, wherein in the connection management device, the virtual machine selection means selects one of the extracted available virtual machine using a condition based on a last-used time instant when both a virtual machine saving the valid user profile for the user who issues the login request and a virtual machine saving no valid user profile for any user are absent in the extracted available virtual machine.

10. The connection management device for the thin client system according to any one of claims 1 to 9.

11. A virtual machine operating device on which a virtual machine runs in the thin client system according to any one of claims 1 to 9.

12. A method comprising:
transmitting, by a thin client terminal, information indicating a user who issues a login request to a thin client system to a connection management device upon acquiring the information;
upon acquiring, from the thin client terminal, the information indicating the user who issues the login request to the thin client system, selecting, by the connection management device, a virtual machine to be allocated to the user who issues the login request to the thin client system by referring to usage information indicating whether each virtual machine running on a virtual machine operating device is in use, and valid profile location information indicating the virtual machine saving a valid user profile for each user of the thin client system, and notifying the thin client terminal of information indicating the selected virtual machine;
connecting, by the thin client terminal, an own device to the virtual machine indicated by information sent from the connection management device and allowing the user to log in;
acquiring, by the virtual machine, the valid user profile for the user who has logged in to an own machine from the own machine or a user profile storage device, and, when the user logs out, saving a user profile of the user used on the own machine and storing the user profile in the user profile storage device;
monitoring, by the virtual machine, a state of connection of the user who logs in to the own machine and notifying the connection management device of the state of connection; and
updating, by the connection management device, the usage information and the valid profile location information according to the state of connection of the user with the virtual machine.

13. A method performed by a connection management device, comprising:
upon acquiring, from a thin client terminal, information indicating a user who issues a login request to a thin client system,
selecting a virtual machine to be allocated to the user who issues the login request to the thin client system, by referring to usage information indicating whether each virtual machine running on a virtual machine operating device is in use, and valid profile location information indicating the virtual machine saving a valid user profile for each user of the thin client system, and connecting the thin client terminal to the selected virtual machine and allowing the user to log in, by notifying the thin client terminal of information indicating the selected virtual machine; and
updating the usage information and the valid profile location information according to a state of connection of the user with the virtual machine.

14. A method performed by a virtual machine running on a virtual machine operating device, the method including performing notification to a device which executes the method according to claim 13, the method comprising:
acquiring the valid user profile for a user who has logged in to an own machine by connection from a thin client terminal from the own machine or a user profile storage device;
when the user logs out, saving the user profile of the user used on the own machine and storing the user profile in the user profile storage device; and
monitoring the state of connection of the user with the own machine and notifying the device of the state of connection.

15. A storage medium storing a program that causes a connection management device to execute:
a user information acquisition step of acquiring, from a thin client terminal, information indicating a user who issues a login request to a thin client system;
a virtual machine selection step of selecting a virtual machine to be allocated to the user who issues the login request to the thin client system, by referring to usage information indicating whether each virtual machine is in use, and valid profile location information indicating the virtual machine saving a valid user profile for each user of the thin client system and;
a connection control step of connecting the thin client terminal to the virtual machine selected in the virtual machine selection step and allowing the user to log in, by notifying the thin client terminal of information indicating the virtual machine; and
an update step of updating the usage information and the valid profile location information according to a state of connection of the user with the virtual machine.

16. A storage medium storing a program that causes a virtual machine running on a virtual machine operating device to perform notification to a device which executes the program according to claim 15, the program causing the virtual machine to execute:
a user profile acquisition step of acquiring a valid user profile for a user who has logged in to an own machine by connection from a thin client terminal from the own machine or a user profile storage device;
a user profile storage step of, when the user logs out, saving a user profile of the user used on the own machine and storing the user profile in the user profile storage device; and
a connection monitoring step of monitoring the state of connection of the user with the own machine and notifying the device of the state of connection.
